# EUROPEAN PATENT SPECIFICATION

(11) **EP 4 417 366 B1**
(45) Date of publication and mention of the grant of the patent: **20.08.2025**
(21) Application number: 21965708.7
(22) Date of filing: 29.11.2021
(51) Int. Cl.: B24B 49/16, B23Q 17/22, B24B 49/10, B24B 47/22

(54) **MACHINE TOOL, METHOD FOR DETECTING CONTACT BETWEEN WHETSTONE AND WORKPIECE BY MEANS OF MACHINE TOOL, AND COMPUTER PROGRAM**
WERKZEUGMASCHINE, VERFAHREN ZUR ERKENNUNG EINES KONTAKTES ZWISCHEN WETZSTEIN UND WERKSTÜCK MITTELS WERKZEUGMASCHINE UND COMPUTERPROGRAMM
MACHINE-OUTIL, PROCÉDÉ DE DÉTECTION DE CONTACT ENTRE UNE PIERRE À AIGUISER ET UNE PIÈCE À TRAVAILLER AU MOYEN D'UNE MACHINE-OUTIL, ET PROGRAMME INFORMATIQUE

(43) Date of publication of application: 21.08.2024
(73) Proprietor: Yamazaki Mazak Corporation, Niwa-gun, Aichi 480-0197 (JP)
(72) Inventor: YAMAMOTO, Yuki, Niwa-gun, Aichi 480-0197 (JP); MORI, Yosuke, Niwa-gun, Aichi 480-0197 (JP)
(74) Representative: TBK
(86) International application number: PCT/JP2021/043643
(87) International publication number: WO 2023/095339

(56) References cited:
- JP-A- 2003 094 328
- JP-A- 2008 110 435
- JP-A- 2020 131 368
- JP-A- H01 252 343

## Description

### Technical Field

The present invention relates to a machine tool, a method for a machine tool to detect contact between a grindstone and a workpiece, and a computer program.

### Background Art

Patent Literature 1 discloses a technique related to a machine tool that grinds a material using a grindstone. The technique is to detect a point of time at which the grindstone contacts a workpiece. Specifically, the technique includes monitoring a current through a motor that rotates the grindstone, moving the workpiece toward the grindstone, and detecting the point of time at which the grindstone contacts the workpiece based on a change in the current at the time of the contact.

Patent Literature 2 discloses a contact detecting method according to the preamble of claim 1.

### Citation List

### Patent Literature

PTL1: JP 11-077491 A
PTL2: JP 2020-131368 A

### Summary of Invention

### Technical Problem

In order to rotate the grindstone at a specified speed, it is necessary to apply great power to the motor first. Upon reaching a predetermined rotational speed, the power of the motor decreases. It takes a predetermined period of time before the power settles down. Meanwhile, it is impossible to set a threshold for detecting the point of time at which the grindstone contacts the workpiece. Thus, contact detection is time-consuming. Also, since the power of the motor is instable, a mis-detection tends to occur even in a non-contact state.

An object of the technique disclosed in the present application is to provide a machine tool, a method for a machine tool to detect contact between a grindstone and a workpiece, and a computer program such that the machine tool, the method, and the computer program highly accurately detect the point of time at which the grindstone contacts the workpiece.

### Solution to Problem

According to a first embodiment of the present disclosure, a method for a machine tool to detect contact between a grindstone and a workpiece includes controlling at least one actuator to move a tool holder in a movement direction relative to a workpiece holder configured to hold the workpiece. The tool holder is configured to hold the grindstone in a manner in which the grindstone is rotatable about a tool rotation axis. A motor is controlled to make one holder selected from the tool holder and the workpiece holder stationary in a direction along a control axis crossing the tool rotation axis and crossing the movement direction. The motor is different from the at least one actuator and configured to move the one holder along the control axis. The contact between the grindstone and the workpiece is detected based on a change in a control value of the motor. Preferably, the motor is a servo motor. Further preferably, the motor is an AC servo motor.

According to a second embodiment of the present disclosure, in the contact detecting method according to the first embodiment, the control axis is perpendicular to the tool rotation axis.

According to a third embodiment of the present disclosure, in the contact detecting method according to the first or second embodiment, the control axis is perpendicular to a line extending in the movement direction.

According to a fourth embodiment of the present disclosure, in the contact detecting method according to any of the first to third embodiments, the motor is configured to move the tool holder along the control axis, and the at least one actuator is at least one additional motor configured to move the tool holder along at least one additional control axis perpendicular to the control axis.

According to a fifth embodiment of the present disclosure, in the contact detecting method according to any of the first to fourth embodiments, the workpiece holder is configured to hold the workpiece in a manner in which the workpiece is rotatable about a workpiece rotation axis. When the tool rotation axis and the workpiece rotation axis exist on an identical plane, the movement direction is parallel to the identical plane. When the tool rotation axis and the workpiece rotation axis are skew with respect to each other, the movement direction is along a line perpendicular to the tool rotation axis and the workpiece rotation axis.

According to a sixth embodiment of the present disclosure, in the contact detecting method according to any of the first to fifth embodiments, the control value includes at least one of a current command value to the motor, a current feedback value from the motor, a position feedback value from the motor, and a speed feedback value from the motor. The position feedback value may be obtained by integrating a rotational speed obtained from a speed detector of the motor, may be obtained from an output value of an angle detector of the motor, or may be obtained from a position detector of the tool holder or the workpiece holder. The speed feedback value may be obtained from the speed detector of the motor, or may be obtained by converting the output value of the angle detector of the motor.

According to a seventh embodiment of the present disclosure, in the contact detecting method according to the sixth embodiment, when a value indicating a central tendency of the current command value per predetermined time width goes outside a predetermined range, it is determined that the grindstone and the workpiece have come into contact each other. A value indicating a central tendency is intended to mean a center value of a numerical value group in a statistical distribution. Examples include an average value, a median value, and a maximum frequency value. Preferably, this range is determined based on a value indicating a central tendency of a current command value per predetermined time width under such a condition that the grindstone is rotated at a rotational speed of the grindstone at the time of grinding with the grindstone out of contact with the workpiece.

According to an eighth embodiment of the present disclosure, in the contact detecting method according to the sixth embodiment, when a value indicating a statistical dispersion of the current feedback value per predetermined time width goes outside a predetermined range, it is determined that the grindstone and the workpiece have come into contact each other. A value indicating a statistical dispersion is intended to mean the degree of a statistical distribution. Examples include a dispersion, a standard deviation, an average absolute deviation, and an average deviation. Preferably, this range is determined based on a value indicating a statistical dispersion of a current feedback value per predetermined time width under such a condition that the grindstone is rotated at a rotational speed of the grindstone at the time of grinding with the grindstone out of contact with the workpiece.

According to a ninth embodiment of the present disclosure, in the contact detecting method according to the sixth embodiment, when a statistical dispersion of the position feedback value per predetermined time width goes outside a predetermined range, it is determined that the grindstone and the workpiece have come into contact each other. Preferably, this range is determined based on a value indicating a statistical dispersion of a position feedback value per predetermined time width under such a condition that the grindstone is rotated at a rotational speed of the grindstone at the time of grinding with the grindstone out of contact with the workpiece.

According to a tenth embodiment of the present disclosure, in the contact detecting method according to the sixth embodiment, when at least one value selected from the speed feedback value and a value indicating a statistical dispersion of the speed feedback value per predetermined time width goes outside a predetermined range, it is determined that the grindstone and the workpiece have come into contact each other. Preferably, this range is determined based on the at least one value under such a condition that the grindstone is rotated at a rotational speed of the grindstone at the time of grinding with the grindstone out of contact with the workpiece.

According to an eleventh embodiment of the present disclosure, in the contact detecting method according to the seventh embodiment, the value indicating the central tendency is represented by at least one value selected from an average value and a root mean square value.

According to a twelfth embodiment of the present disclosure, in the contact detecting method according to any one of the eighth to tenth embodiments, the value indicating the statistical dispersion is represented by at least one value including a standard deviation.

According to a thirteenth embodiment of the present disclosure, in the contact detecting method according to the ninth or tenth embodiment, a value indicating the statistical dispersion is represented by at least one value including a root mean square value.

A machine tool according to a fourteenth embodiment of the present disclosure includes for performing the contact detecting method according to any one of the first to thirteenth embodiments. Preferably, the machine tool includes a tool holder configured to hold a grindstone in a manner in which the grindstone is rotatable about a tool rotation axis, a workpiece holder configured to hold a workpiece, at least one actuator configured to move one of the tool holder and the workpiece holder in a movement direction relative to the other of the tool holder and the workpiece holder, a motor configured to move the tool holder or the workpiece holder along a control axis, and an electronic circuit configured to detect the at least one actuator and monitor a control value of the motor to determine whether the grindstone and the workpiece is in contact with each other. The electronic circuit is configured to execute the contact detecting method according to any one of the first to thirteenth embodiments.

A computer program according to a fifteenth embodiment of the present disclosure includes an instruction to cause the computer to perform the contact detecting method according to any one of the first to thirteenth embodiments.

A computer readable storage medium according to a sixteenth embodiment of the present disclosure stores the computer program according to the fifteenth embodiment.

In the contact detecting method according to the first embodiment, in the machine tool according to the fourteenth embodiment including the means for performing the contact detecting method according to the first embodiment, in the computer program according to the fifteenth embodiment including an instruction to cause the computer to perform the contact detecting method according to the first embodiment, and in the storage medium according to the sixteenth embodiment storing the computer program, contact between a grindstone and a workpiece is detected based on a change in a control value of a motor that performs control that does not need great power and easily secures stable power. This eliminates the need for much time for the setting for detection of contact between the grindstone and the workpiece, and stabilizes signals at non-contact time. As a result, highly accurate contact detection is ensured. Further, the control axis crosses the tool rotation axis and crosses the movement direction. This increases the component in the control axis direction of resistance occurring due to the contact between the grindstone and the workpiece. This ensures that the contact can be detected based on a control value of the motor. Also, when the motor is a servo motor, the control value can be used as a feedback signal. This eliminates the need for providing an additional sensor to detect the contact, ensuring highly accurate contact detection. Further, by using an AC motor, the lifetime of the motor can be elongated.

In the contact detecting method according to the second embodiment, in the machine tool according to the fourteenth embodiment including the means for performing the contact detecting method according to the second embodiment, in the computer program according to the fifteenth embodiment including an instruction to cause the computer to perform the contact detecting method according to the second embodiment, and in the storage medium according to the sixteenth embodiment storing the computer program, the control axis is perpendicular to the tool rotation axis. This further increases the component in the control axis direction of the resistance occurring due to the contact between the grindstone and the workpiece. As a result, further highly accurate contact detection is ensured.

In the contact detecting method according to the third embodiment, in the machine tool according to the fourteenth embodiment including the means for performing the contact detecting method according to the third embodiment, in the computer program according to the fifteenth embodiment including an instruction to cause the computer to perform the contact detecting method according to the third embodiment, and in the storage medium according to the sixteenth embodiment storing the computer program, the control axis is perpendicular to a line extending in the movement direction. This further increases the component in the control axis direction of the resistance occurring due to the contact between the grindstone and the workpiece. As a result, further highly accurate contact detection is ensured.

In the contact detecting method according to the fourth embodiment, in the machine tool according to the fourteenth embodiment including the means for performing the contact detecting method according to the fourth embodiment, in the computer program according to the fifteenth embodiment including an instruction to cause the computer to perform the contact detecting method according to the fourth embodiment, and in the storage medium according to the sixteenth embodiment storing the computer program, a control value of a motor that controls a motion of a grindstone smaller in inertia moment than a workpiece is generally used for contact detection. This makes the control value change greatly due to contact-caused resistance. As a result, further highly accurate contact detection is ensured.

In the contact detecting method according to the fifth embodiment, in the machine tool according to the fourteenth embodiment including the means for performing the contact detecting method according to the fifth embodiment, in the computer program according to the fifteenth embodiment including an instruction to cause the computer to perform the contact detecting method according to the fifth embodiment, and in the storage medium according to the sixteenth embodiment storing the computer program, when the workpiece has a shape of a rotation surface relative to workpiece rotation axis and when the grindstone has a shape a rotation surface relative to a tool rotation axis, the grindstone can be ground at a desired place such that the grindstone can approach the workpiece in a shortest distance direction.

In the contact detecting method according to the sixth embodiment, in the machine tool according to the fourteenth embodiment including the means for performing the contact detecting method according to the sixth embodiment, in the computer program according to the fifteenth embodiment including an instruction to cause the computer to perform the contact detecting method according to the sixth embodiment, and in the storage medium according to the sixteenth embodiment storing the computer program, the control value includes at least one value variable based on a contact between the grindstone and the workpiece. The at least one value includes a current command value to the motor, a current feedback value from the motor, a position feedback value from the motor, and a speed feedback value from the motor. As a result, highly accurate contact detection is ensured.

In a fine contact state, there is a few to several micrometers of contact between the grindstone and the workpiece. In this state, significant differences are not distinguishable when the maximum value and the minimal value of the current command value are respectively compared with the maximum value and the minimal value of the current command value in a non-contact state, in which there is no contact between the grindstone and the workpiece. Therefore, it is difficult to perform a detection based on a threshold. In a contact state, however, there is such a tendency that the current command value is partial to or around its maximum value or minimal value. Therefore, a significant difference can be distinguished in a value indicating a central tendency of the current command value per predetermined time width. In the contact detecting method according to the seventh embodiment, in the machine tool according to the fourteenth embodiment including the means for performing the contact detecting method according to the seventh embodiment, in the computer program according to the fifteenth embodiment including an instruction to cause the computer to perform the contact detecting method according to the seventh embodiment, and in the storage medium according to the sixteenth embodiment storing the computer program, this property of the current command value is utilized to detect a fine level of contact, such as a few to several micrometers of contact.

In a fine contact state, there is a few to several micrometers of contact between the grindstone and the workpiece. In this state, a significant difference is not distinguishable when the current feedback value is compared with the current feedback value in a non-contact state, in which there is no contact between the grindstone and the workpiece. Also, in a non-contact state before and after a contact state, the current feedback value can vary. Therefore, it is difficult to perform a detection based on a threshold. In a contact state, however, the variation in the current feedback value per predetermined time width tends to increase. Therefore, a significant difference can be distinguished in a value indicating a statistical dispersion of the current feedback value per predetermined time width. In the contact detecting method according to the eighth embodiment, in the machine tool according to the fourteenth embodiment including the means for performing the contact detecting method according to the eighth embodiment, in the computer program according to the fifteenth embodiment including an instruction to cause the computer to perform the contact detecting method according to the eighth embodiment, and in the storage medium according to the sixteenth embodiment storing the computer program, this property of the current feedback value is utilized to detect a fine level of contact, such as a few to several micrometers of contact.

In a fine contact state, there is a few to several micrometers of contact between the grindstone and the workpiece. In this state, significant differences are not distinguishable when the maximum value and the minimal value of the position feedback value are respectively compared with the maximum value and the minimal value of the position feedback value in a non-contact state, in which there is no contact between the grindstone and the workpiece. Therefore, it is difficult to perform a detection based on a threshold. In a contact state, however, the variation in the position feedback value per predetermined time width tends to increase. Therefore, a significant difference can be distinguished in a value indicating a statistical dispersion of the position feedback value per predetermined time width. In the contact detecting method according to the ninth embodiment, in the machine tool according to the fourteenth embodiment including the means for performing the contact detecting method according to the ninth embodiment, in the computer program according to the fifteenth embodiment including an instruction to cause the computer to perform the contact detecting method according to the ninth embodiment, and in the storage medium according to the sixteenth embodiment storing the computer program, this property of the position feedback value is utilized to detect a fine level of contact, such as a few to several micrometers of contact.

Even in a fine contact state, in which the grindstone and the workpiece contact each other by a few to several micrometers, significant differences can be distinguished when the maximum value and the minimal value of the speed feedback value are respectively compared with the maximum value and the minimal value of the speed feedback value in a non-contact state, in which there is no contact between the grindstone and the workpiece. Due to the significant differences, in a contact state, the variation in the speed feedback value per predetermined time width tends to increase. This ensures that a significant difference can be distinguished in a value indicating a statistical dispersion of the speed feedback value per predetermined time width as well. In the contact detecting method according to the tenth embodiment, in the machine tool according to the fourteenth embodiment including the means for performing the contact detecting method according to the tenth embodiment, in the computer program according to the fifteenth embodiment including an instruction to cause the computer to perform the contact detecting method according to the tenth embodiment, and in the storage medium according to the sixteenth embodiment storing the computer program, this property of the speed feedback value is utilized to detect a fine level of contact, such as a few to several micrometers of contact.

In the contact detecting method according to the eleventh embodiment, in the machine tool according to the fourteenth embodiment including the means for performing the contact detecting method according to the eleventh embodiment, in the computer program according to the fifteenth embodiment including an instruction to cause the computer to perform the contact detecting method according to the eleventh embodiment, and in the storage medium according to the sixteenth embodiment storing the computer program, the absolute value of a value indicating a central tendency of a current command value per predetermined time width is much greater than the value of a statistical dispersion of the current command value. Accordingly, a root mean square value obtained by adding the central tendency of the current command value per predetermined time width and the statistical dispersion of the current command value varies, similarly to the value indicating the central tendency of the current command value per predetermined time width. This ensures that a fine level of contact, such as a few to several micrometers of contact, can be detected using average values and/or root mean square values supported in many hardware applications.

In the contact detecting method according to the twelfth embodiment, in the machine tool according to the fourteenth embodiment including the means for performing the contact detecting method according to the twelfth embodiment, in the computer program according to the fifteenth embodiment including an instruction to cause the computer to perform the contact detecting method according to the twelfth embodiment, and in the storage medium according to the sixteenth embodiment storing the computer program, a standard deviation supported in many hardware applications is used. This facilitates installment of the contact detecting method and the like.

In the contact detecting method according to the thirteenth embodiment, in the machine tool according to the fourteenth embodiment including the means for performing the contact detecting method according to the thirteenth embodiment, in the computer program according to the fifteenth embodiment including an instruction to cause the computer to perform the contact detecting method according to the thirteenth embodiment, and in the storage medium according to the sixteenth embodiment storing the computer program, the absolute value of a value indicating a central tendency of the speed feedback value/position feedback value is a value close to zero. Accordingly, a root mean square value obtained by adding the central tendency of the speed feedback value/position feedback value per predetermined time width and the statistical dispersion of the speed feedback value/position feedback value per predetermined time width varies, similarly to the statistical dispersion. This ensures that a fine level of contact, such as a few to several micrometers of contact, can be detected as well using a root mean square value supported in many hardware applications.

### Effects of Invention

The technique disclosed in the present application ensures that the point of time at which the grindstone contacts the workpiece can be detected highly accurately. More specifically, a fine level of contact, such as a few to several micrometers of contact, between the grindstone and the workpiece can be detected.

### Brief Description of Drawings

[FIG. 1] FIG. 1 illustrates a configuration of a machine tool according to an embodiment.
[FIG. 2] FIG. 2 is a block diagram of circuits associated with a motor according to the embodiment.
[FIG. 3] FIG. 3 is a control block diagram illustrating how the motor is controlled by a semi-closed loop system.
[FIG. 4] FIG. 4 is a control block diagram illustrating how the motor is controlled by a full-closed loop system.
[FIG. 5] FIG. 5 illustrates an example method of moving a grindstone toward a workpiece.
[FIG. 6] FIG. 6 illustrates an example method of moving the grindstone toward the workpiece.
[FIG. 7] FIG. 7 illustrates an example method of moving the grindstone toward the workpiece.
[FIG. 8] FIG. 8 illustrates an example method of moving the grindstone toward the workpiece.
[FIG. 9] FIG. 9 illustrates an example method of moving the grindstone toward the workpiece.
[FIG. 10] FIG. 10 illustrates an example graph showing changes in a current command value of a second motor in a case where the second motor is position-controlled.
[FIG. 11] FIG. 11 illustrates an example graph showing changes in an average value of the current command value of the second motor in a case where the second motor is position-controlled.
[FIG. 12] FIG. 12 illustrates an example graph showing changes in a standard deviation of the current command value of the second motor in a case where the second motor is position-controlled.
[FIG. 13] FIG. 13 illustrates an example graph showing changes in a root mean square value of the current command value of the second motor in a case where the second motor is position-controlled.
[FIG. 14] FIG. 14 illustrates an example graph showing changes in a current feedback value of the second motor in a case where the second motor is position-controlled.
[FIG. 15] FIG. 15 illustrates an example graph showing changes in an average value of the current feedback value of the second motor in a case where the second motor is position-controlled.
[FIG. 16] FIG. 16 illustrates an example graph showing changes in a standard deviation of the current feedback value of the second motor in a case where the second motor is position-controlled.
[FIG. 17] FIG. 17 illustrates an example graph showing changes in a root mean square value of the current feedback value of the second motor in a case where the second motor is position-controlled.
[FIG. 18] FIG. 18 illustrates an example graph showing changes in a speed feedback value of the second motor in a case where the second motor is position-controlled.
[FIG. 19] FIG. 19 illustrates an example graph showing changes in an average value of the speed feedback value of the second motor in a case where the second motor is position-controlled.
[FIG. 20] FIG. 20 illustrates an example graph showing changes in a standard deviation of the speed feedback value of the second motor in a case where the second motor is position-controlled.
[FIG. 21] FIG. 21 illustrates an example graph showing changes in a root mean square value of the speed feedback value of the second motor in a case where the second motor is position-controlled.
[FIG. 22] FIG. 22 illustrates an example graph showing changes in a position feedback value of the second motor in a case where the second motor is position-controlled.
[FIG. 23] FIG. 23 illustrates an example graph showing changes in an average value of the position feedback value of the second motor in a case where the second motor is position-controlled.
[FIG. 24] FIG. 24 illustrates an example graph showing changes in a standard deviation of the position feedback value of the second motor in a case where the second motor is position-controlled.
[FIG. 25] FIG. 25 illustrates an example graph showing changes in a root mean square value of the position feedback value of the second motor in a case where the second motor is position-controlled.
[FIG. 26] FIG. 26 is a flowchart of processing performed in a method according to an embodiment of detecting contact between the grindstone and the workpiece.

### Description of Embodiments

The present invention will now be described with reference to the accompanying drawings, wherein like reference numerals designate corresponding or identical elements throughout the various drawings.

### <Embodiment>

### <Configuration of Machine Tool 1>

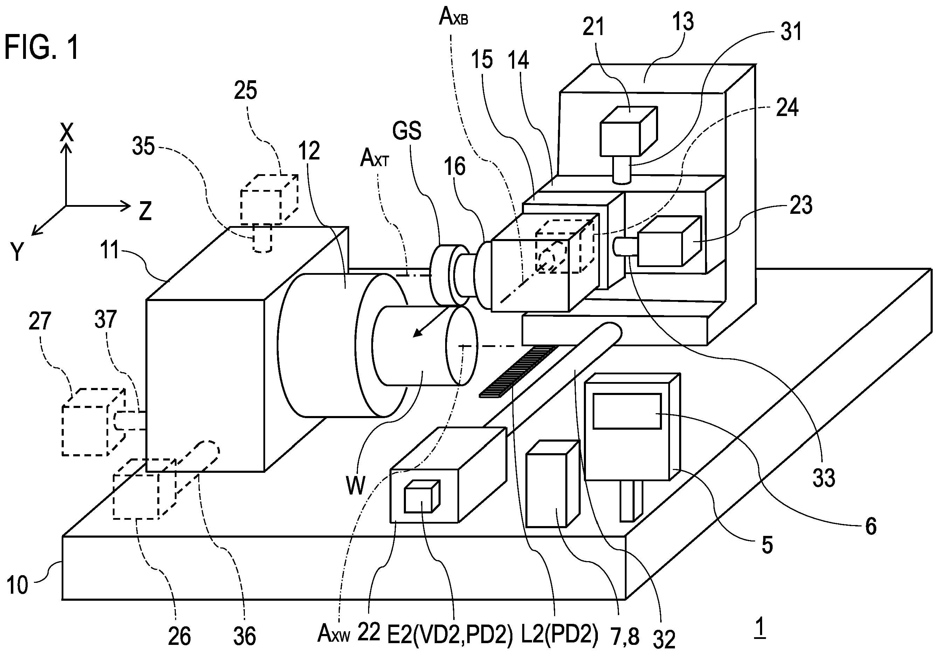

FIG. 1 is a block diagram illustrating a configuration of a machine tool 1 according to this embodiment of the present invention. The machine tool 1 includes a base 10, a workpiece headstock 11, a workpiece holder 12, a carriage 13, a saddle 14, a tool headstock 15, a tool holder 16, a first motor 21, a second motor 22, a third motor 23, a fourth motor 24, a first ball screw 31, a second ball screw 32, and a third ball screw 33. The base 10 supports the workpiece headstock 11, the workpiece holder 12, the carriage 13, the saddle 14, the tool headstock 15, the tool holder 16, the first motor 21, the second motor 22, the third motor 23, the fourth motor 24, the first ball screw 31, the second ball screw 32, and the third ball screw 33. An axis along a workpiece rotation axis A_{XW}, described later, will be referred to as Z axis. An axis perpendicular to the Z axis and along an upper surface of the base 10 will be referred to as the Y axis. An axis perpendicular to the Y axis and the Z axis will be referred to as X axis.

The workpiece headstock 11 supports the workpiece holder 12 in a manner in which the workpiece holder 12 is rotatable about the workpiece rotation axis A_{XW}. For example, a motor, not illustrated, configured to rotate the workpiece holder 12 about the workpiece rotation axis A_{XW} is mounted on the workpiece headstock 11. An example of the workpiece holder 12 is a workpiece spindle. The workpiece holder 12 holds a workpiece W in a manner in which the workpiece W is rotatable about the workpiece rotation axis A_{XW}. The carriage 13 is connected to the second motor 22 via the second ball screw 32. The second motor 22 is configured to move the saddle 14, the tool headstock 15, and the tool holder 16 in a direction along the Y axis (Y axis direction). The carriage 13 supports the first motor 21 and slidably supports the saddle 14, the tool headstock 15, and the tool holder 16. The saddle 14 is connected to the first motor 21 via the first ball screw 31. The first motor 21 is configured to move the saddle 14 in a direction along the X axis (X axis direction).

The saddle 14 supports the third motor 23 and slidably supports the tool headstock 15 and the tool holder 16 in a direction along the Z axis (Z axis direction). The third motor 23 is configured to move the tool headstock 15 and the tool holder 16 in the Z axis direction. The tool headstock 15 supports the tool holder 16 in a manner in which the tool holder 16 is rotatable about a B axis A_{XB}. The fourth motor 24 is configured to rotate the tool holder 16 about the B axis A_{XB}. A motor, not illustrated, configured to rotate the tool holder 16 about a tool rotation axis A_{XT} is mounted on the tool headstock 15. An example of the tool holder 16 is a tool spindle. The tool holder 16 holds a grindstone GS in a manner in which the grindstone GS is rotatable about the tool rotation axis A_{XT}.

It is to be noted that the workpiece headstock 11 may include structures similar to the carriage 13 and the saddle 14, similarly to the tool headstock 15. It is also to be noted that the machine tool 1 may further include a fifth motor 25, a sixth motor 26, and a seventh motor 27 so that the fifth motor 25, the sixth motor 26, and the seventh motor 27 respectively drive the workpiece headstock 11 in the X axis direction, the Y axis direction, and the Z axis direction. It is also to be noted that the machine tool 1 may further include a fifth ball screw 35, a sixth ball screw 36, and a seventh ball screw 37 so that the fifth ball screw 35, the sixth ball screw 36, and the seventh ball screw 37 respectively connect the fifth motor 25, the sixth motor 26, and the seventh motor 27 to the workpiece headstock 11. In the following description of the embodiment, the first motor 21, the second motor 22, the third motor 23, the fourth motor 24, the fifth motor 25, the sixth motor 26, and the seventh motor 27 may be collectively referred to as a plurality of motors 20. Preferably, each of the plurality of motors 20 is a servo motor. More preferably, each of the plurality of motors 20 is an AC servo motor.

Each of the first motor 21, the second motor 22, the third motor 23, the fifth motor 25, the sixth motor 26, and the seventh motor 27 is configured to move the tool holder 16 or the workpiece holder 12 along a control axis of the each motor. The control axis of the first motor 21 and the control axis of the fifth motor 25 are the X axis. The control axis of the second motor 22 and the control axis of the sixth motor 26 are the Y axis. The control axis of the third motor 23 and the control axis of the seventh motor 27 are the Z axis.

The machine tool 1 further includes a numerical controller 5, an I/O interface 6, a servo driver 7, and a monitoring device 8. The numerical controller 5 is configured to control rotation and other operations of the plurality of motors 20, the workpiece holder 12, and the tool holder 16 to machine the workpiece W into a desired shape. The I/O interface 6 includes an input device such as a button and a display device such as a display. The I/O interface 6 is preferably a touch panel display. Based on a command value from the numerical controller 5, the servo driver 7 outputs an optimal current or voltage to the motor 20. The monitoring device 8 monitors a signal transmitted as a result of feedback control of the motor 20. When the signal satisfies a predetermined condition, the monitoring device 8 transmits a signal to the numerical controller 5. For example, based on a signal from the motor 20, the monitoring device 8 determines whether there is contact between the grindstone GS and the workpiece W. Then, the monitoring device 8 transmits, to the numerical controller 5, a signal indicating the presence or absence of the contact. Upon receipt of a signal indicating that there is contact between the grindstone GS and the workpiece W, the numerical controller 5 stops movement of the grindstone GS and the workpiece W relative to each other, and returns the position of the grindstone GS or the workpiece W to its predetermined position.

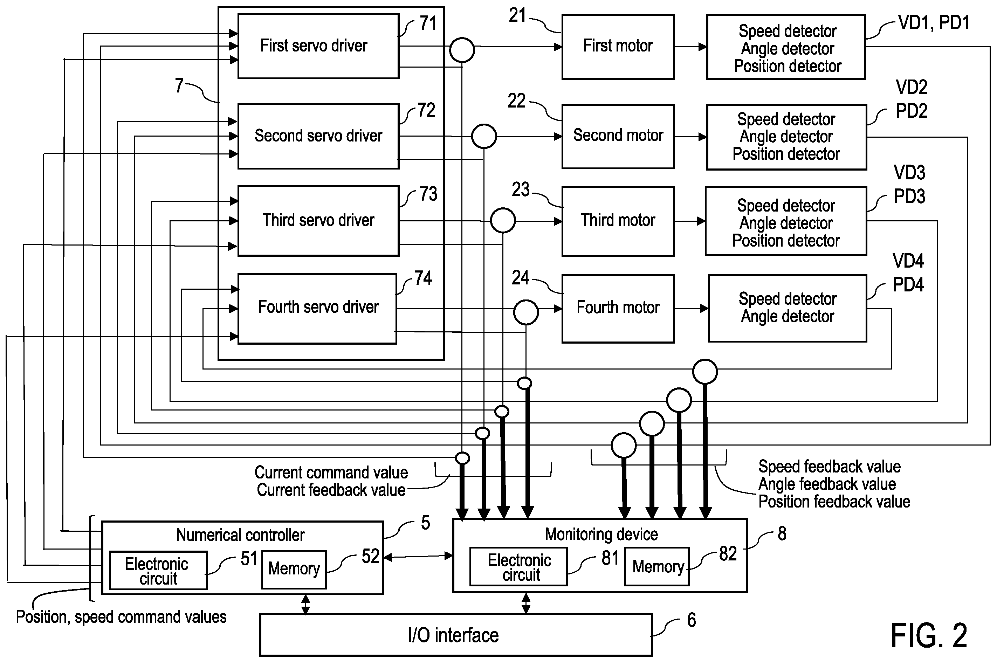

FIG. 2 is a block diagram of circuits associated with the motor 20 according to this embodiment. The numerical controller 5 includes an electronic circuit 51 and a memory 52. Referring to FIG. 2, an example of the electronic circuit 51 is a processor such as ECU. The memory 52 is configured to store, for example, a machining program for machining the workpiece W. The electronic circuit 51 executes the machining program to control rotation and other operations of the motor 20, the workpiece holder 12, and the tool holder 16. The monitoring device 8 includes an electronic circuit 81 and a memory 82. The electronic circuit 81 is a hardware processor such as ECU. The memory 82 stores a logic for determining contact. The electronic circuit 81 executes the logic.

Also referring to FIG. 2, at least one of speed detectors VD1 to VD4 and at least one of position detectors (angle detectors) PD1 to PD4 are mounted on each of the first to fourth motors 21 to 24 illustrated in FIG. 1. It is to be noted that the servo driver 7 may further include speed detectors and position detector (angle detectors), not illustrated, that respectively control the fifth motor 25, the sixth motor 26, and the seventh motor 27. In the following description of the embodiment, these speed detectors will be collectively referred to as speed detector VD. These position detectors (angle detectors) will be collectively referred to as position detector (angle detector) PD.

An example of the speed detector VD is an incremental encoder E. The encoder E is connected to the motor 20. In FIG. 1, an encoder E2 is connected to the second motor 22 and denoted as speed detector VD2. An example of the angle detector PD is an incremental encoder E, which is connected to the motor 20. The rotational angle of the motor 20 detected by the angle detector PD is obtained by integrating an output of the encoder E. It is to be noted that the encoder E may be an absolute encoder, an output value of the encoder E may be an output of angle detector PD, and a displacement of the output value may be an output of speed detector VD. In FIG. 1, the encoder E2, which is connected to the second motor 22, is denoted as speed detector PD2. An example of the position detector PD is a linear scale L. The linear scale L measures a position of the workpiece holder 12 or the tool holder 16. In FIG. 1, the position detector PD is denoted as linear scale L2. The linear scale L2 detects a position of the carriage 13 in the Y axis direction.

Referring to FIG. 2, the servo driver 7 includes a first servo driver 71, a second servo driver 72, a third servo driver 73, and a fourth servo driver 74. The first servo driver 71, the second servo driver 72, the third servo driver 73, and the fourth servo driver 74 respectively control first motor 21, the second motor 22, the third motor 23, and the fourth motor 24. It is to be noted that the servo driver 7 may further include servo drivers, not illustrated, that respectively control the fifth motor 25, the sixth motor 26, and the seventh motor 27. The fourth motor 24 does not include a position detector PD corresponding to a linear scale. The fourth servo driver 74, therefore, does not process information from a linear scale. Otherwise, the fourth servo driver 74 is identical in basic function to the other servo drivers. In view of this, the servo drivers will be hereinafter collectively referred to as servo driver 70.

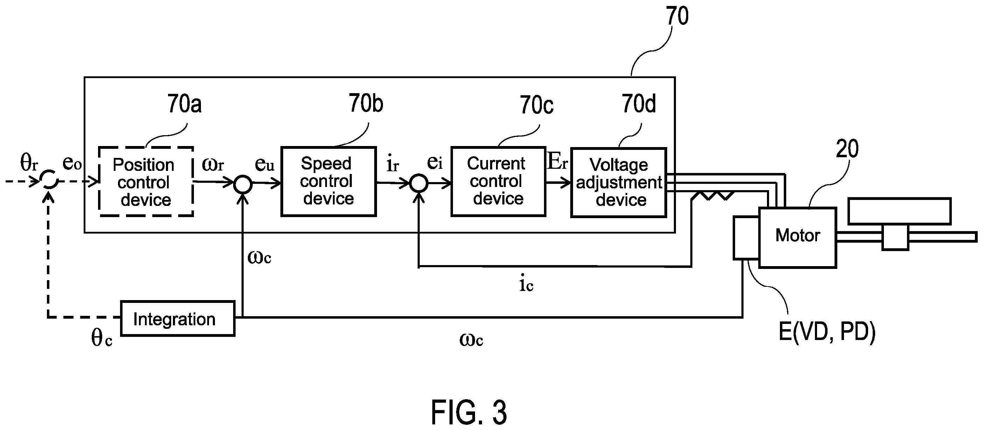

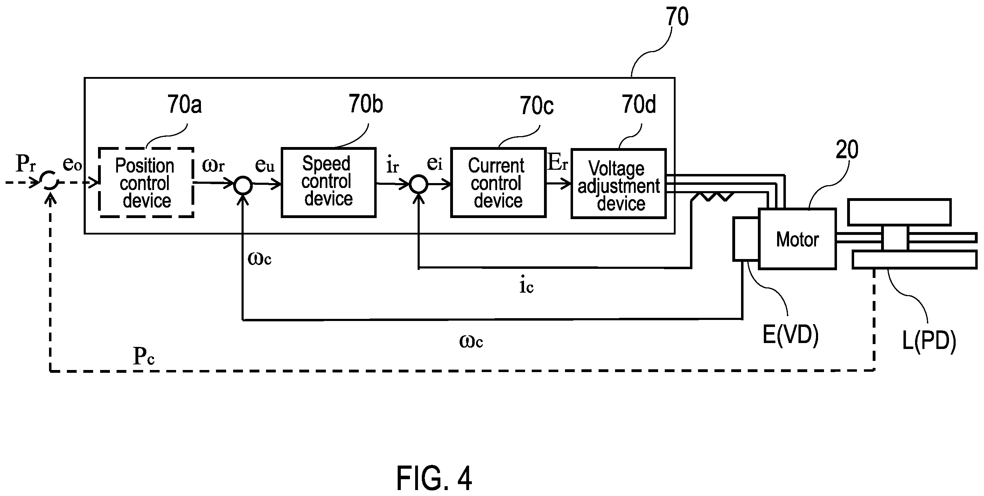

The monitoring device 8 is electrically connected to the numerical controller 5, the servo driver 7, the speed detector VD, and the position detector (angle detector) PD. FIGs. 3 and 4 are control block diagrams illustrating control of the motor 20 and describe signals associated with these elements in detail. FIG. 3 is a control block diagram illustrating feedback control of a system (semi-closed loop system) in a case where the encoder E is used as the position detector (angle detector) PD. FIG. 4 is a control block diagram illustrating feedback control of a system (full-closed loop system) in a case where the linear scale L is used as the position detector PD. Referring to FIGs. 3 and 4, the servo driver 70 includes a position control device 70a, a speed control device 70b, a current control device 70c, and a voltage adjustment device 70d.

Referring to FIG. 3, in a case where position control is performed in a semi-closed loop system, an error *eₒ* between a position command value *θᵣ* and a position feedback value *θ_{c}* is input to the position control device 70a. The position command value *θᵣ* is a position command value from the numerical controller 5. The position feedback value *θ_{c}* is obtained by integrating the output value of the encoder E. The position control device 70a outputs a speed command value *ωᵣ* using normal proportional control (P control). Referring to FIG. 4, in a case where position control is performed in a full-closed loop system, an error *eₒ* between a position command value *Pᵣ* and a position feedback value *P_{c}* is input to the position control device 70a. The position command value *Pᵣ* is a position command value from the numerical controller 5. The position feedback value *P_{c}* is obtained from the linear scale L. The position control device 70a outputs a speed command value *ωᵣ* using normal proportional control (P control). In a case where speed control of the speed of the workpiece holder 12 or the tool holder 16 is performed, the speed command value *ωᵣ* is input to the speed control device 70b from the numerical controller 5.

The processing that follows is common to the semi-closed loop system, the full-closed method, and the speed control. An error *eᵤ* is input to the speed control device 70b. The error *eᵤ* is an error between the speed command value *ωᵣ* and a speed feedback value *ω_{c}.* The speed feedback value *ω_{c}* is obtained from the encoder E. The speed control device 70b outputs a current command value *iᵣ* using normal proportional integration control (PI control). A error *eⱼ* between the current command value *iᵣ* and a current feedback value *i_{c}* is input to the current control device 70c. The current feedback value *i_{c}* is obtained as an output of the voltage adjustment device 70d. The current control device 70c outputs a voltage command value *Eᵣ* using normal proportional integration control (PI control). The voltage adjustment device 70d is generally a power amplifier. Based on the voltage command value *Eᵣ*, the voltage adjustment device 70d outputs a drive current *i_{c}* to the motor 20 to control the motor 20.

Referring again to FIG. 2, the monitoring device 8 is configured to monitor the position command value *θᵣ, Pᵣ,* or the speed command value *ωᵣ* as output from the numerical controller 5; the speed command value *ωᵣ* as output from the position control device 70a; the current command value *iᵣ* as output from the speed control device 70b; the current feedback value *i_{c}* as output from the voltage adjustment device 70d; the speed feedback value *ω_{c}* as output from the encoder E; and the position feedback value *θ_{c}* obtained by integrating a value output from the encoder E (or the position feedback value *P_{c}* output from the linear scale L). In the following description of the embodiment, these values monitored by the monitoring device 8 will be referred to as control values. The monitoring device 8 includes the electronic circuit 81. The electronic circuit 81 is configured to calculate, for example, an average, a standard deviation, a root mean square value of these values. When one value of these values or calculated values satisfies a predetermined condition, the electronic circuit 81 is capable of outputting a signal to the numerical controller 5. The numerical controller 5 is capable of setting, in the memory 82 of the monitoring device 8, a parameter (threshold) for specifying a predetermined condition.

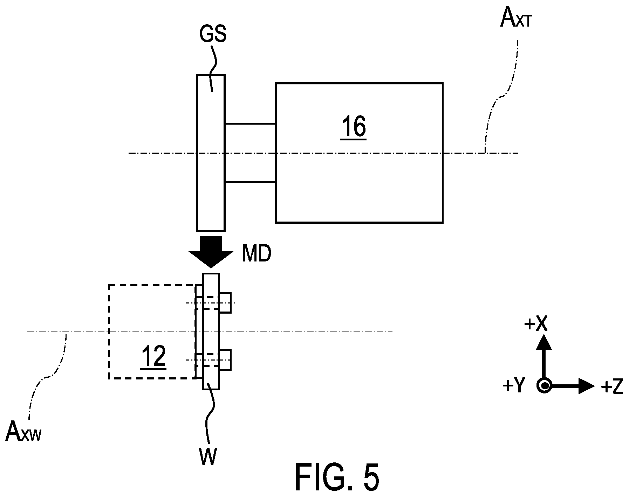

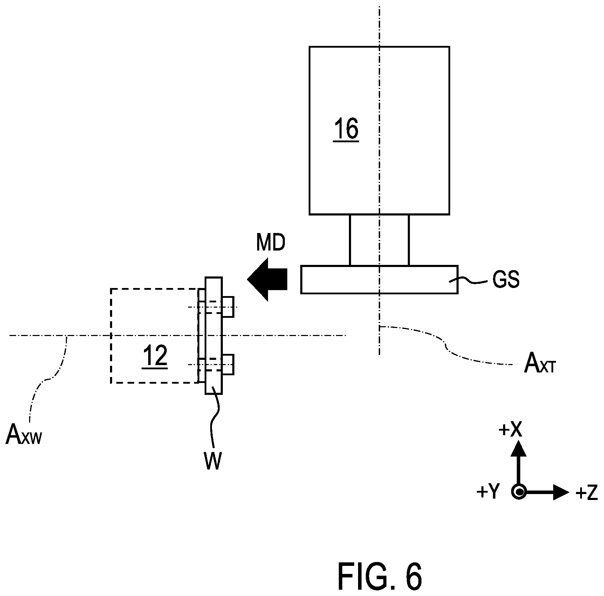

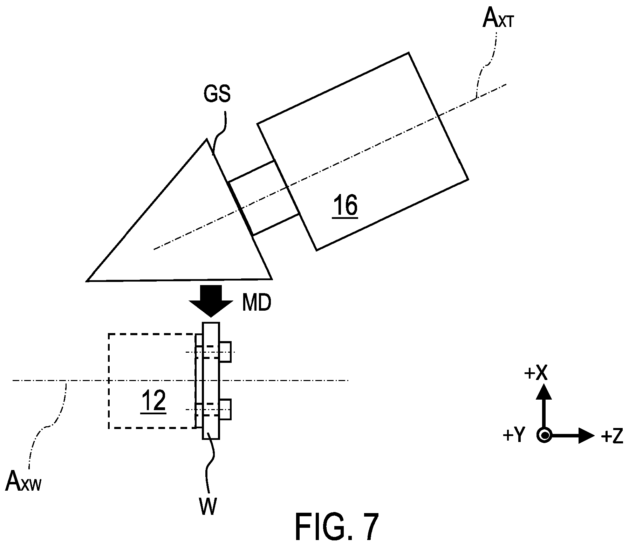

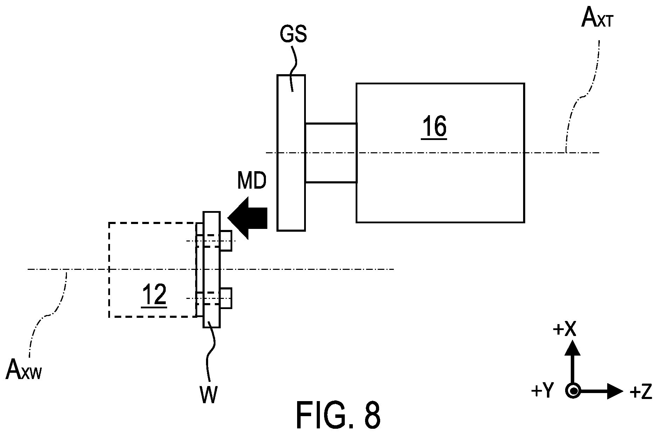

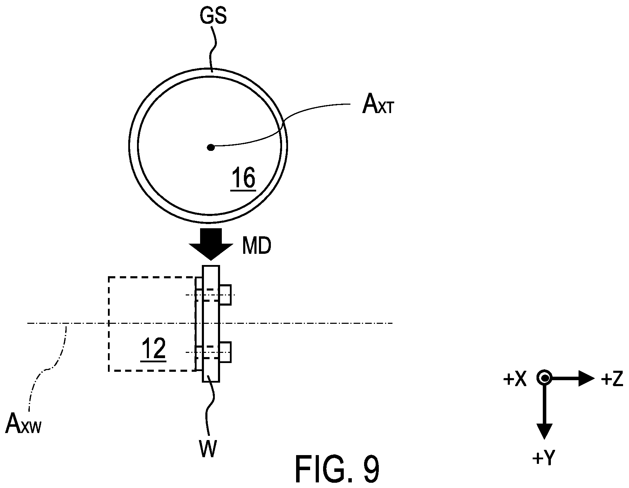

FIGs. 5 to 9 each illustrate an example method of moving the grindstone GS toward the workpiece W. In FIGs. 5 to 9, the grindstone GS is illustrated as being larger than the workpiece W. In most actual situations, however, the workpiece W is larger than the grindstone GS. FIG. 5 illustrates an example in which the grindstone GS is moved in the X axis direction with the tool rotation axis A_{XT} and the workpiece rotation axis A_{XW} being oriented in a direction parallel to the Z axis. FIG. 6 illustrates an example in which the grindstone GS is moved in the Z axis direction with the tool rotation axis A_{XT} being oriented in a direction parallel to the X axis and the workpiece rotation axis A_{XW} being oriented in a direction parallel to the Z axis so that the tool rotation axis A_{XT} and the workpiece rotation axis A_{XW} are on an identical plane. FIG. 7 illustrates an example in which the grindstone GS has a conical shape and in which the grindstone GS is inclined and moved along the X axis so that a conical side surface of the grindstone GS is parallel to a grinding target surface of the workpiece W and that the tool rotation axis A_{XT} and the workpiece rotation axis A_{XW} are on an identical plane. FIG. 8 illustrates an example in which the grindstone GS is moved in the Z axis direction with the tool rotation axis A_{XT} and the workpiece rotation axis A_{XW} being oriented in a direction parallel to the Z axis. FIG. 9 illustrates an example in which the grindstone GS is moved in the Y axis direction with the tool rotation axis A_{XT} being oriented in a direction parallel to the X axis and the workpiece rotation axis A_{XW} being oriented in a direction parallel to the Z axis.

In the following description, the arrow other than the coordinate axes illustrated in each of FIGs. 5 to 9 indicates a movement direction *MD* of the grindstone GS. As illustrated in the examples of FIGs. 5 to 8, when the tool rotation axis A_{XT} and the workpiece rotation axis A_{XW} exist on an identical plane, the movement direction *MD* is parallel to the identical plane. As illustrated in the example of FIG. 9, when the tool rotation axis A_{XT} and the workpiece rotation axis A_{XW} are lines that are skew with respect to each other, the movement direction *MD* is along a line perpendicular to the tool rotation axis A_{XT} and the workpiece rotation axis A_{XW}. The motor 20 involved in these movements of the grindstone GS will be referred to as at least one actuator. The motor 20 involved in these movements of the grindstone GS may be referred to as additional motor. In the example illustrated in FIG. 5, the first motor 21 corresponds to the at least one actuator. In the example illustrated in FIG. 6, the third motor 23 corresponds to the at least one actuator. In the example illustrated in FIG. 7, the first motor 21 and the third motor 23 correspond to the at least one actuator. In the example illustrated in FIG. 8, the third motor 23 corresponds to the at least one actuator. In the example illustrated in FIG. 9, the second motor 22 corresponds to the at least one actuator.

It is to be noted that in the examples illustrated in FIGs. 5 to 9, it may be the workpiece W that is moved, instead of the grindstone GS. In particular, in a case where a desired surface can not be obtained by grinding without moving the workpiece W, it is preferable to move the workpiece W. In this case, in the example illustrated in FIG. 5, the fifth motor 25 corresponds to the at least one actuator. In the example illustrated in FIG. 6, the seventh motor 27 corresponds to the at least one actuator. In the example illustrated in FIG. 7, the fifth motor 25 and the seventh motor 27 correspond to the at least one actuator. In the example illustrated in FIG. 8, the seventh motor 27 corresponds to the at least one actuator. In the example illustrated in FIG. 9, the sixth motor 26 corresponds to the at least one actuator. The control axis of the at least one actuator may be referred to as an additional control axis.

In this embodiment, a motor, among the first to seventh motors 21 to 27, that is different from the at least one actuator is controlled to make one holder selected from the tool holder 16 and the workpiece holder 12 stationary in a direction along the control axis. Further, contact between the grindstone GS and the workpiece W is detected based on a change in a control value a motor, among the motors, whose control axis is not perpendicular to the direction of friction torque resulting from the contact between the grindstone GS and the workpiece W. Specifically, the control axis of a motor used to detect contact between the grindstone GS and the workpiece W crosses the tool rotation axis A_{XT} and crosses the movement direction *MD*. Further preferably, a motor whose control axis is substantially parallel to the direction of friction torque resulting from contact between the grindstone GS and the workpiece W is used to detect the contact between the grindstone GS and the workpiece W. That is, the control axis is preferably perpendicular to the tool rotation axis A_{XT}. The control axis is preferably perpendicular to a line extending in the movement direction *MD.*

In the example illustrated in FIG. 5, the second motor 22 or the sixth motor 26 is preferably used to detect contact between the grindstone GS and the workpiece W. In the example illustrated in FIG. 6, the second motor 22 or the sixth motor 26 is preferably used to detect contact between the grindstone GS and the workpiece W. In the example illustrated in FIG. 7, the second motor 22 or the sixth motor 26 is preferably used to detect contact between the grindstone GS and the workpiece W. In the example illustrated in FIG. 8, the second motor 22 or the sixth motor 26 is preferably used to detect contact between the grindstone GS and the workpiece W. In the example illustrated in FIG. 9, the third motor 23 or the seventh motor 27 is preferably used to detect contact between the grindstone GS and the workpiece W.

Further, a motor, among the motors whose control axes are not perpendicular to the direction of friction torque resulting from contact between the grindstone GS and the workpiece W, that controls movement of the grindstone GS is further preferably used to detect contact between the grindstone GS and the workpiece W. This is because, generally, inertia (inertia moment) of the grindstone GS is smaller than inertia (inertia moment) of the workpiece W, and an acceleration caused by the friction torque is indicated by a great value, resulting in a great control value. In the examples illustrated in FIGs. 5 to 8, the second motor 22 is preferably used to detect contact between the grindstone GS and the workpiece W. In this case, the at least one actuator is at least one additional motor configured to move the tool holder 16 along at least one additional control axis perpendicular to the control axis of the second motor 22. In the example illustrated in FIG. 9, the third motor 23 is preferably used. In this case, the at least one actuator is at least one additional motor configured to move the tool holder 16 along at least one additional control axis perpendicular to the control axis of the third motor 23. It is to be noted, however, that in a case where the inertia (inertia moment) of the grindstone GS is larger than the inertia (inertia moment) of the workpiece W, a motor that controls movement of the workpiece W may be used to detect contact between the grindstone GS and the workpiece W.

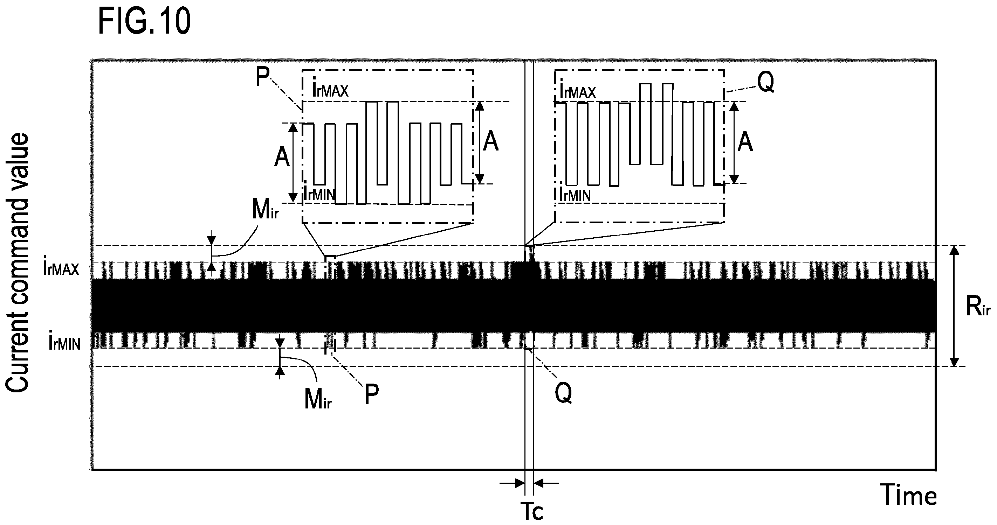

FIGs. 10 to 25 each illustrate exemplary changes in a signal of the control system of the second motor 22 in a case where the first motor 21 is controlled and the second motor 22 is position-controlled at a predetermined position so that the grindstone GS is moved in the manner illustrated in FIG. 5 and stopped at time *T_{c}* illustrated in a state in which there is a fine level of contact, such as a few to several micrometers of contact, between the grindstone GS and the workpiece W. It is to be noted that the second motor 22 is controlled in a semi-closed loop system. In a case where the second motor 22 is controlled in a full-closed loop system as well, signals having properties approximately similar to those illustrated in FIGs. 10 to 25 are detected. In a case where the second motor is speed-controlled to make the speed zero, signals having properties approximately similar to those illustrated in FIGs. 10 to 21 are detected.

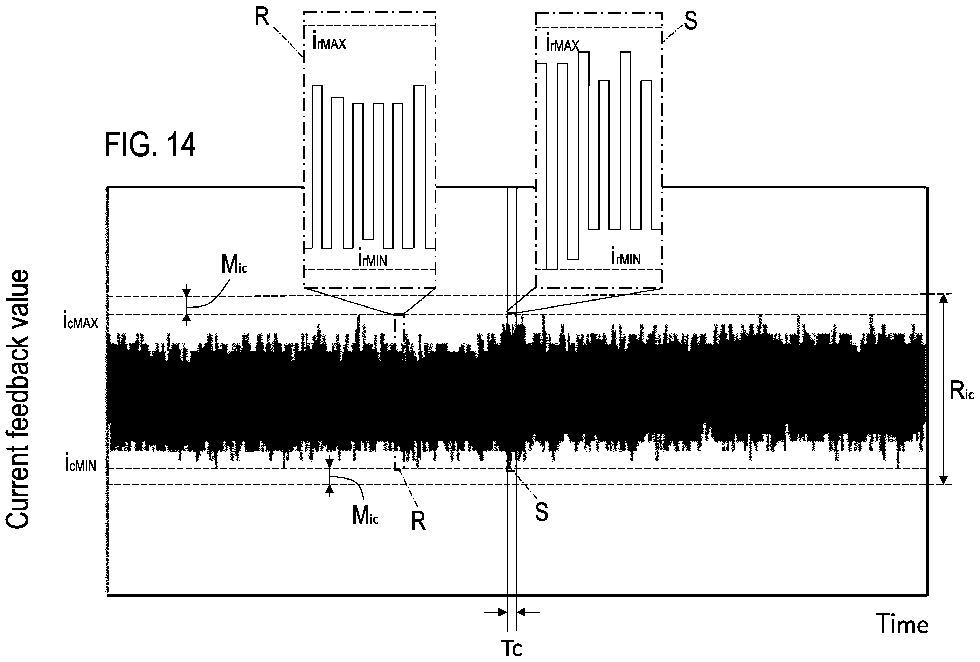

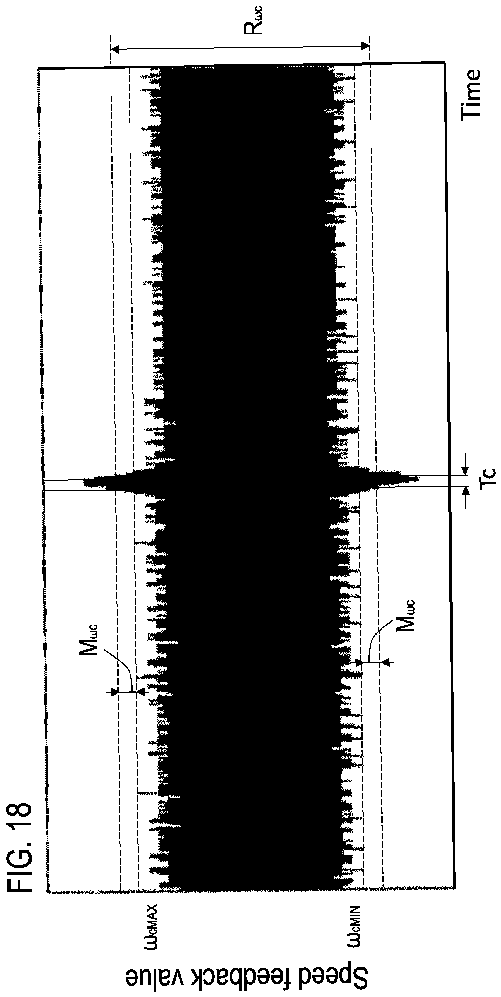

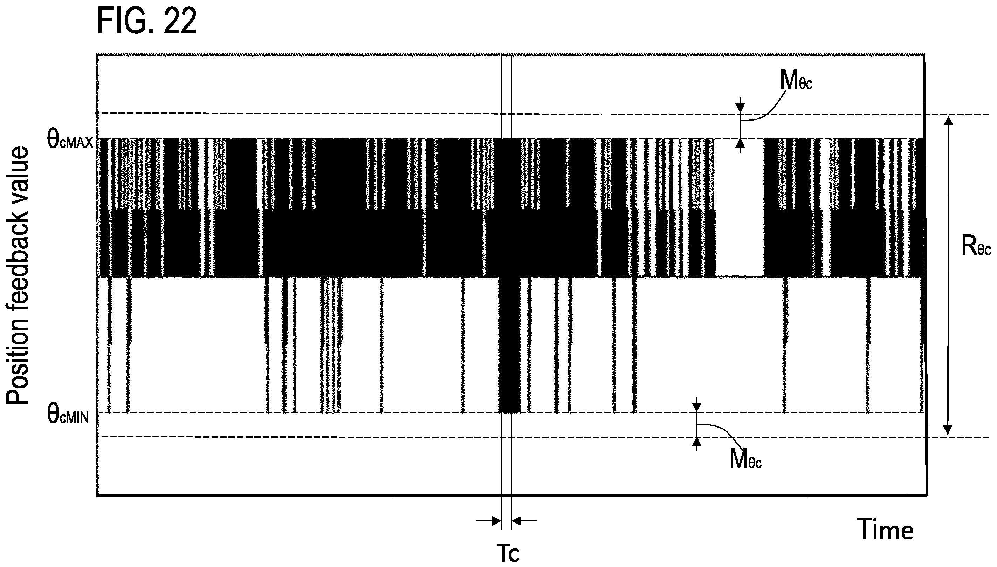

Specifically, FIGs. 10 to 13 respectively illustrate exemplary changes in the current command value *iᵣ* of the second motor 22, the average value of the current command value *iᵣ,* the standard deviation of the current command value *iᵣ,* and the root mean square value of the current command value *iᵣ* in a case where the second motor 22 is position-controlled. FIGs. 14 to 17 respectively illustrate exemplary changes in the current feedback value *i_{c}* of the second motor 22, the average value of the current feedback value *i_{c},* the standard deviation of the current feedback value *i_{c},* and the root mean square value of the current feedback value *i_{c}* in a case where the second motor 22 is position-controlled. FIGs. 18 to 21 respectively illustrate exemplary changes in the speed feedback value *ω_{c}* of the second motor 22, the average value of the speed feedback value *ω_{c},* the standard deviation of the speed feedback value *ω_{c}*, and the root mean square value of the speed feedback value *ω_{c}* in a case where the second motor 22 is position-controlled. FIGs. 22 to 25 respectively illustrate exemplary changes in the position feedback value *θ_{c}* of the second motor 22, the average value of the position feedback value *θ_{c}*, the standard deviation of the position feedback value *θ_{c}*, and the root mean square value of the position feedback value *θ_{c}* in a case where the second motor 22 is position-controlled.

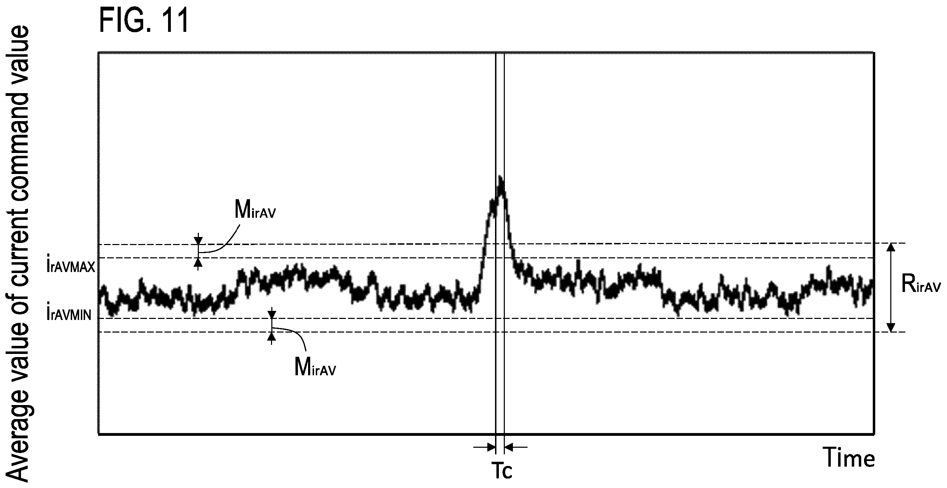

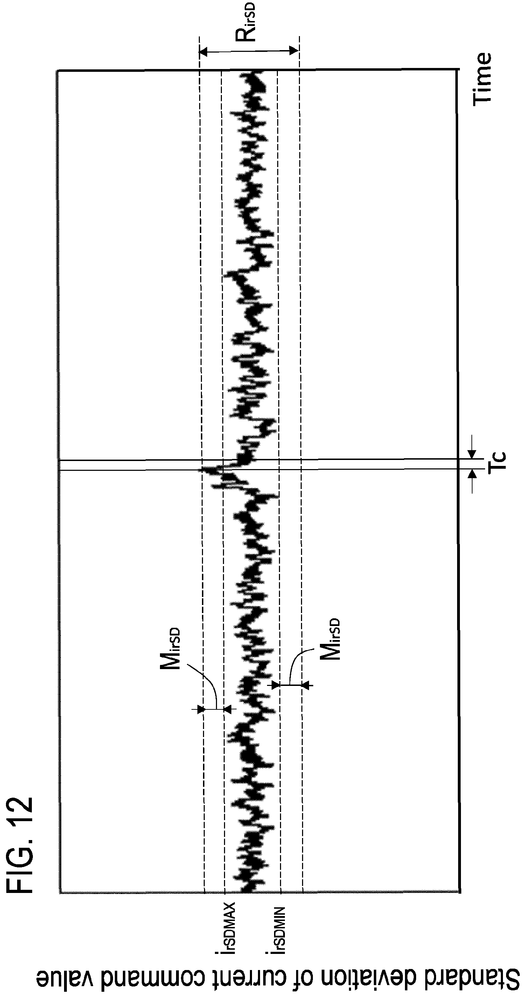

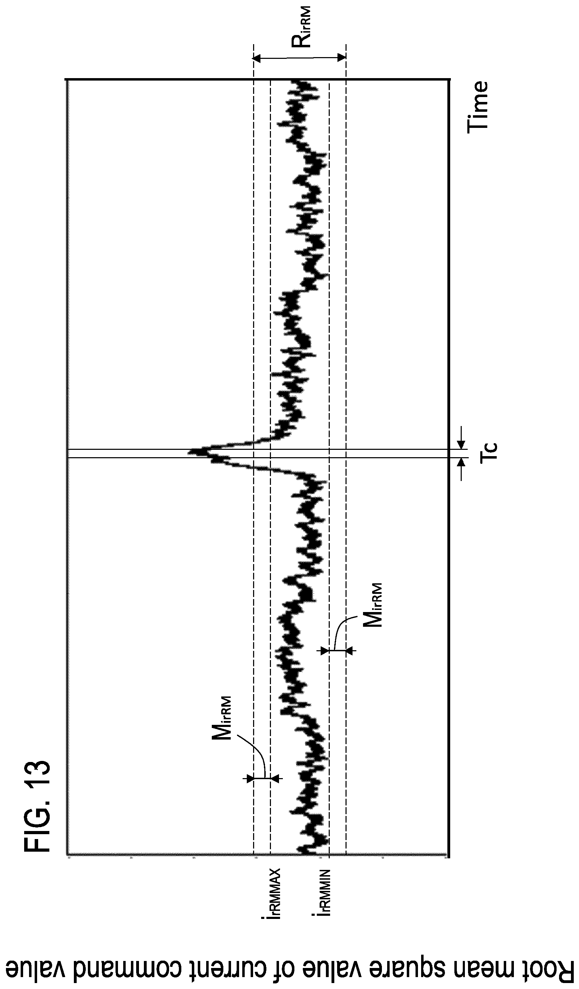

Each average value, each standard deviation, and each root mean square value described above are respectively an average value, a standard deviation, and a root mean square value of a control value in a predetermined time width including time points before and after the time point of interest. That is, each of the average values illustrated in FIGs. 11, 15, 19, and 23 is a moving average on a predetermined time-width basis. Each of the standard deviations illustrated in FIGs. 12, 16, 20, and 24 is a standard deviation on a predetermined time-width basis. Each of the root mean square values illustrated in FIGs. 13, 17, 21, and 25 is a root mean square value on a predetermined time-width basis.

Referring to FIG. 10, in a fine contact state, in which the grindstone GS and the workpiece W contact each other by a few to several micrometers, significant differences are not distinguishable when the maximum value and the minimal value of the current command value *iᵣ* are respectively compared with the maximum value, *i_{rMAX},* and the minimal value, *i_{rMIN},* of the current command value *iᵣ* in a non-contact state, in which there is no contact between the grindstone GS and the workpiece W. In FIG. 10, the current command value *iᵣ* is only slightly above the maximum value *i_{rMAX}* at some of the time *T_{c}.* Thus, even if the current command value *iᵣ* is used as it is, it is difficult to perform a detection based on a threshold. This is because, at contact time, there is a low possibility of the current command value *iᵣ* going outside a range *Rᵢᵣ* [*i_{rMIN}-Mᵢᵣ, i_{rMAX}+Mᵢᵣ*]*.* The range *Rᵢᵣ* is obtained by adding, to the maximum value *i_{rMAX}* and the minimal value *i_{rMIN}* of the current command value *iᵣ,* a margin *Mᵢᵣ* for removing an influence such as a noise influence.

However, in a contact state, there is such a tendency that the current command value *iᵣ* is partial to or around the maximum value *i_{rMAX}* or the minimal value *i_{rMIN}* Therefore, a significant difference can be distinguished in a value indicating a central tendency of the current command value *iᵣ* per predetermined time. A value indicating the central tendency of the current command value *iᵣ* per predetermined time width is obtained from a plurality of the current command values *iᵣ* in the time width including the time of interest. In FIG. 10, in a contact state, the current command value *iᵣ* is partial to or around the maximum value *i_{rMAX}.* Therefore, as illustrated in FIG. 11, the average value of the current command value *iᵣ* per predetermined time width increases as compared with the corresponding value at non-contact time. Accordingly, it can be determined that the grindstone GS and the workpiece W have come into contact with each other when the average value of the current command value *iᵣ* per predetermined time width goes outside a range *R_{irAV}* [*i_{rAVMIN}* - *M_{irAV}*, *i_{rAVMAX}* + *M_{irAV}*]*.* The range *R_{irAV}* is obtained by adding a margin *Mi_{rAV}* to the maximum value, *i_{rAVMAX},* and the minimal value, *i_{rAVMIN},* of the average value of the current command value *iᵣ* per predetermined time width in a non-contact state.

In contrast, as indicated by enlarged regions P and Q illustrated in FIG. 10, the current command value *iᵣ* vibrates approximately at the same frequency between *i_{rMAX}* and *i_{rMIN}* and a main amplitude of the current command value *iᵣ* does not change greatly. Accordingly, the statistical dispersion of the current command value *iᵣ* per predetermined time width does not change greatly. Thus, as illustrated in FIG. 12, it is difficult to find a difference in the standard deviation of the current command value *iᵣ* between the contact state and the non-contact state. That is, there is a low possibility of the standard deviation of the current command value *iᵣ* going outside a range *R_{irSD}* [*i_{rSDMIN} - M_{irSD}, i_{rSDMAX}* + *M_{irSD}*] at contact time. The range *R_{irSD}* is obtained by adding, to the maximum value, *i_{rSDMAX},* and the minimal value, *i_{rSDMIN},* of the standard deviation of the current command value *iᵣ,* a margin *M_{irSD}* for removing an influence such as a noise influence. Thus, it is difficult to use the standard deviation of the current command value *iᵣ* to detect contact between the grindstone GS and the workpiece W.

The root mean square value of the current command value *iᵣ* is equal to a square root of a value obtained by averaging a square of an instantaneous value of current over one period. The root mean square value of the current command value *iᵣ* is a value obtained by adding a central tendency of the current command value *iᵣ* per predetermined time width to a statistical dispersion of the current command value *iᵣ.* In a case of an AC servo motor, current occurs even in a stationary state. Therefore, the absolute value of a value indicating the central tendency of the current command value *iᵣ* per predetermined time width is much greater than the value of the statistical dispersion of the current command value *iᵣ*. Thus, in the root mean square value of the current command value *iᵣ,* the central tendency of the current command value *iᵣ* contributes more greatly than the statistical dispersion of the current command value *iᵣ.* Thus, as illustrated in FIG. 13, the root mean square value of the current command value *iᵣ* per predetermined time width increases as compared with the corresponding value at non-contact time. The root mean square value of the current command value *iᵣ* per predetermined time width is obtained from a plurality of the current command values *iᵣ* in the time width including the time of interest. Accordingly, it can be determined that the grindstone GS and the workpiece W have come into contact with each other when the root mean square value of the current command value *iᵣ* per predetermined time width goes outside a range *R_{irRM}* [*i_{rRMMIN} - M_{irRM}*, *i_{rRMMAX}* + *Mi_{rRM}*]. The range *R_{irRM} is* obtained by adding a margin *M_{irRM}* to the maximum value, *i_{rRMMAX},* and the minimal value, *i_{rRMMIN},* of the root mean square value of the current command value *iᵣ* per predetermined time width in a non-contact state.

Referring to FIG. 14, in a fine contact state, the grindstone GS and the workpiece W contact each other by a few to several micrometers. In this state, significant differences are not distinguishable when the maximum value and the minimal value of the current feedback value *i_{c}* are respectively compared with the maximum value, *i_{cMAX},* and the minimal value, *i_{cMIN},* of the current feedback value *i_{c}* in a non-contact state, in which there is no contact between the grindstone GS and the workpiece W. Thus, even if the current feedback value *i_{c}* is used as it is, it is difficult to perform a detection based on a threshold. This is because, at contact time, there is a low possibility of the current feedback value *i_{c}* going outside a range [*i_{cMIN}* - *M_{ic}, i_{cMAX}* + *M_{ic}*]. The range is obtained by adding, to the maximum value, *i_{cMAX},* and the minimal value, *i_{cMIN},* of the current feedback value *i_{c}, a* margin *M_{ic}* for removing an influence such as a noise influence.

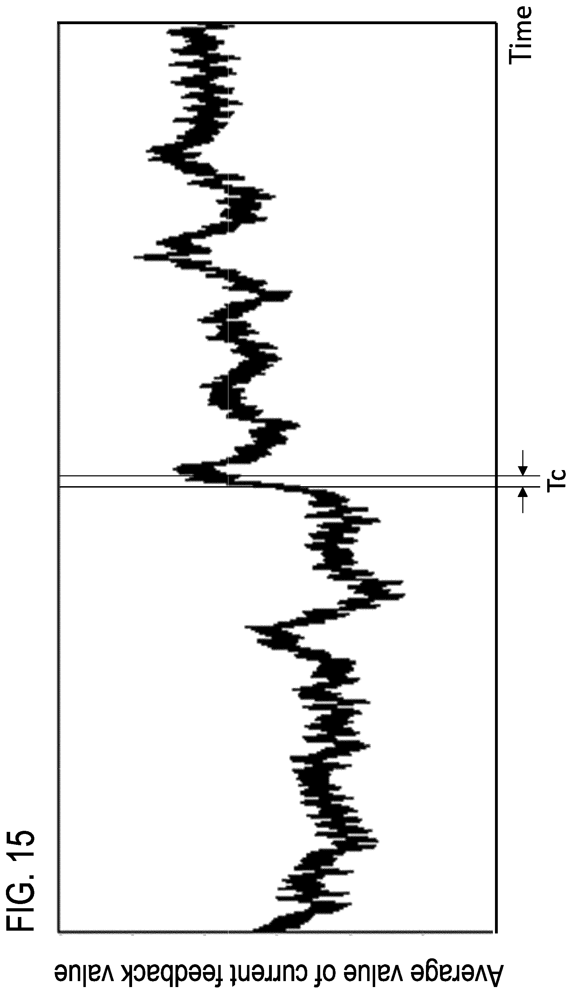

As illustrated in FIG. 15, the average value of the current feedback value *i_{c}* changes before or after contact. Thus, a value indicating the central tendency of the current feedback value *i_{c}* per predetermined time width changes before or after contact. Therefore, it is difficult to determine whether there is contact using a value indicating the central tendency of the current feedback value *i_{c}* per predetermined time width.

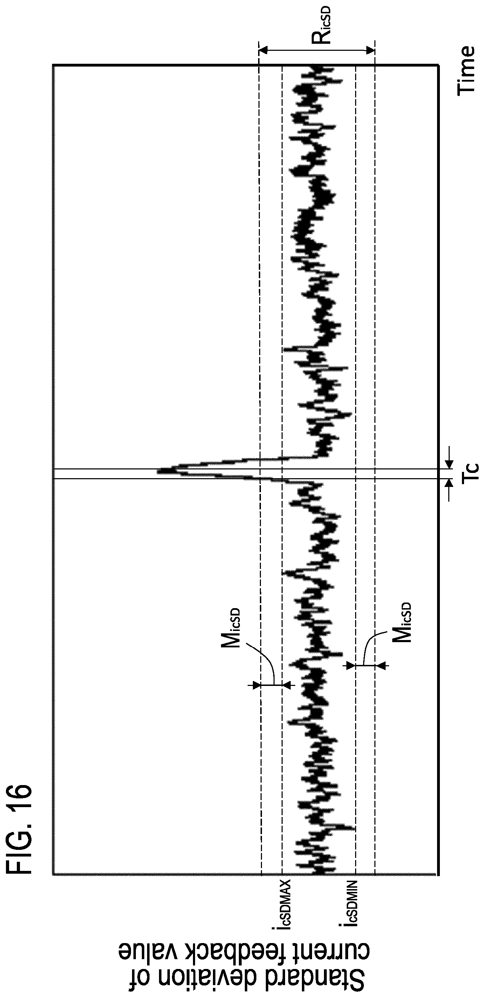

In contrast, as indicated by enlarged regions R and S illustrated in FIG. 14, the current feedback value *i_{c}* shows an increase in great amplitude changes at contact time. Accordingly, the statistical dispersion of the current feedback value *i_{c}* increases. The statistical dispersion of the current feedback value *i_{c}* per predetermined time width is obtained from a plurality of the current feedback values *i_{c}* in the time width including the time of interest. Therefore, as illustrated in FIG. 16, a significant difference can be distinguished between the contact state and the non-contact state in the standard deviation of the current feedback value *i_{c}.* Accordingly, it can be determined that the grindstone GS and the workpiece W have come into contact with each other when the standard deviation of the current feedback value *i_{c}* per predetermined time width goes outside a range *R_{icSD}* [*i_{cSDMIN}* -*M_{icSD}, i_{cSDMAX} + M_{icSD}*]. The range *R_{icSD}* is obtained by adding a margin *M_{icSD}* to the maximum value, *i_{cSDMAX},* and the minimal value, *i_{cSDMIN},* of the standard deviation of the current feedback value *i_{c}* per predetermined time width in a non-contact state.

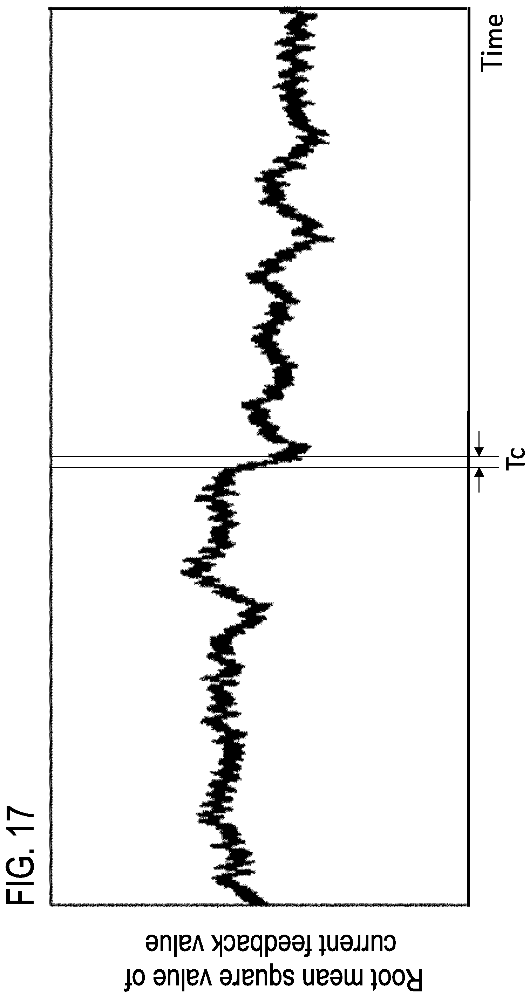

Further, the absolute value of a value indicating the central tendency of the current feedback value *i_{c}* per predetermined time width is much greater than the value of the statistical dispersion of the current feedback value *i_{c}.* Therefore, in the root mean square value of the current feedback value *i_{c},* the central tendency of the current feedback value *i_{c}* contributes more greatly than the statistical dispersion of the current feedback value *i_{c}.* Thus, as illustrated in FIG. 17, the root mean square value of the current feedback value *i_{c}* per predetermined time width does not change to the extent that the values at contact time are not distinguishable from the values at non-contact time. The root mean square value of the current feedback value *i_{c}* per predetermined time width is obtained from a plurality of the current feedback values *i_{c}* in the time width including the time of interest. Thus, it is difficult to determine whether there is contact using the root mean square value.

Referring to FIG. 18, in a fine contact state, the grindstone GS and the workpiece W contact each other by a few to several micrometers. In this state, significant differences are not distinguishable when the speed feedback value *ω_{c}* is compared with the maximum value, *ω_{cMAX}*, and the minimal value, *ω_{cMIN},* of the speed feedback value *ω_{c}* in a non-contact state, in which there is no contact between the grindstone GS and the workpiece W. Thus, as illustrated in FIG. 18, it can be determined that the grindstone GS and the workpiece W have come into contact with each other when the speed feedback value *ω_{c}* goes outside a range *R_{ωc}* [*ωcMIN - M_{ωc}, ωcMAX + M_{ωc}*]. The range *R_{ωc}* is obtained by adding a margin *M_{ωc}* to the maximum value, *ω_{cMAX},* and the minimal value, *ω_{cMIN}*, of the speed feedback value *ω_{c}* in a non-contact state.

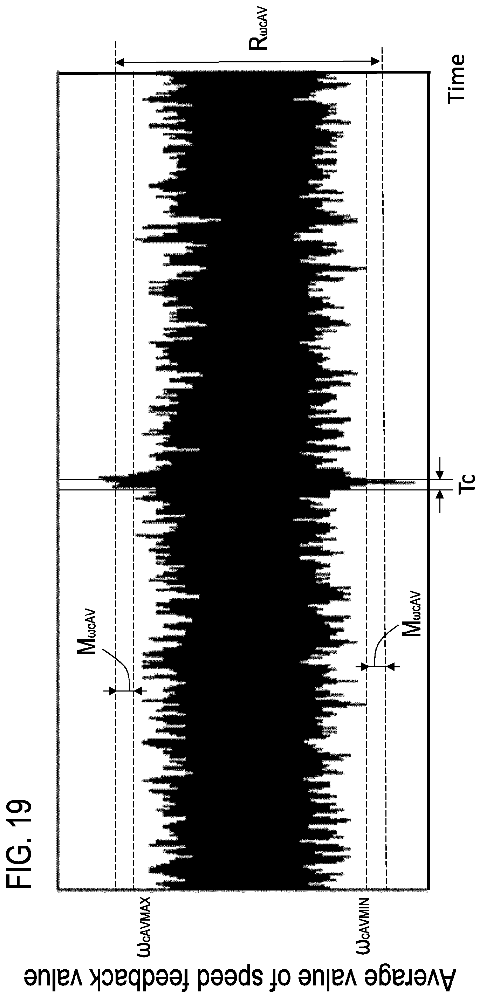

In a case where there is a difference between the time width serving as a basis for calculating a value indicating the central tendency of the speed feedback value *ω_{c}* and the variable frequency of the speed feedback value *ω_{c},* there may be a case where the value indicating the central tendency in the time width is calculated as a value partial to or around the maximum value *ω_{cMAX}* or the minimal value *ω_{cMIN}.* For example, a possible case is that the number of speed feedback values *ω_{c}* in excess of the maximum value *ω_{cMAX}* in the time width is greatly larger than the number of speed feedback values *ω_{c}* below the minimal value *ω_{cMIN}* in the time width. In this case, as illustrated in FIG. 19, due to the presence or absence of contact, a significant difference can be distinguished in a value indicating the central tendency of the speed feedback value *ω_{c}* per predetermined time width. A value indicating the central tendency of the speed feedback value *ω_{c}* per predetermined time width is obtained from a plurality of the speed feedback values *ω_{c}* in the time width including the time of interest. In this respect, as illustrated in FIG. 19, it can be determined that the grindstone GS and the workpiece W have come into contact with each other when the average value of the speed feedback value *ω_{c}* per predetermined time width goes outside a range *R_{ωcAV}* [*ω_{cAVMIN}* - *M_{ωcAV}*, *ω_{cAVMAX} + M_{ωcAV}*]. The range *R_{ωcAV}* is obtained by adding a margin *M_{ωcAV}* to the maximum value, *ω_{cMAX}*, and the minimal value, *ω_{cAVMIN},* of the average value of the speed feedback value *ω_{c}* per predetermined time width in a non-contact state. It is to be noted that, for example, in a case where the grindstone GS and the workpiece W contact for a particular time or in a case where a particular material is used, the presence or absence of contact may not necessarily cause a difference to occur in a value indicating the central tendency of the speed feedback value *ω_{c}* per predetermined time width. In this case, it is difficult to detect contact using a value indicating the central tendency of the speed feedback value *ω_{c}.*

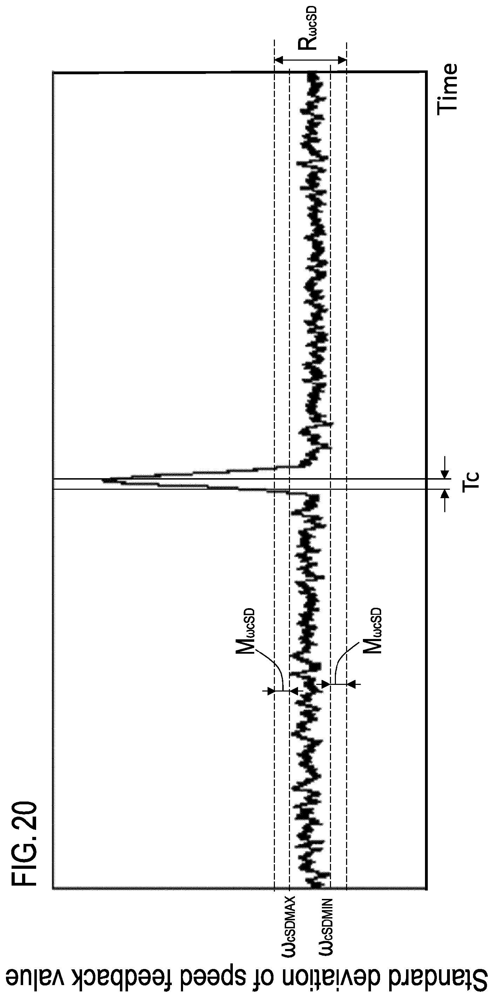

As illustrated in FIG. 18, the speed feedback value *ω_{c}* shows an increase in great amplitude changes at contact time. Accordingly, the statistical dispersion of the speed feedback value *ω_{c}* per predetermined time width increases. The statistical dispersion of the speed feedback value *ω_{c}* per predetermined time width is obtained from a plurality of the speed feedback values *ω_{c}* in the time width including the time of interest. Thus, as illustrated in FIG. 20, a significant difference can be distinguished between the contact state and the non-contact state in the standard deviation of the speed feedback value *ω_{c}* per predetermined time width. Accordingly, it can be determined that the grindstone GS and the workpiece W have come into contact with each other when the standard deviation of the speed feedback value *ω_{c}* per predetermined time width goes outside a range *R_{ωcSD}* [*ω_{cSDMIN} - M_{ωcSD}, ω_{cSDMAX} + M_{ωcSD}*]. The range *R_{ωcSD}* is obtained by adding a margin *M_{ωcSD}* to the maximum value, *ω_{cSDMAX},* and the minimal value, *ω_{cSDMIN},* of the standard deviation of the speed feedback value *ω_{c}* per predetermined time width in a non-contact state.

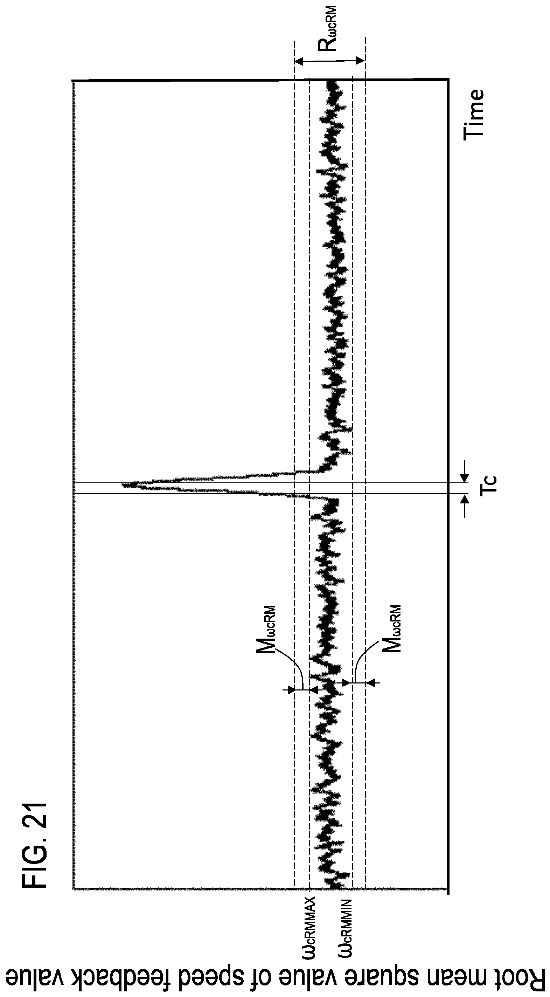

Further, the absolute value of a value indicating the central tendency of the speed feedback value *ω_{c}* is close to zero, in which case the value of the statistical dispersion of the speed feedback value *ω_{c}* is much larger. Thus, in the root mean square value of the speed feedback value *ω_{c}*, the statistical dispersion of the speed feedback value *ω_{c}* contributes more greatly than a value indicating the central tendency of the speed feedback value *ω_{c}.* Thus, as illustrated in FIG. 21, the root mean square value of the speed feedback value *ω_{c}* per predetermined time width increases as compared with the corresponding value at non-contact time. The root mean square value of the speed feedback value *ω_{c}* per predetermined time width is obtained from a plurality of the speed feedback values *ω_{c}* in the time width including the time of interest. Accordingly, it can be determined that the grindstone GS and the workpiece W have come into contact with each other when the root mean square value of the speed feedback value *ω_{c}* per predetermined time width goes outside a range *R_{ωcRM}* [*ω_{cRMMIN} - M_{ωcRM}, ω_{cRMMAX} + M_{ωcRM}*]. The range *R_{ωcRM}* is obtained by adding a margin *M_{ωcRM}* to the maximum value, *ω_{crRMMAX},* and the minimal value, *ω_{cRMMIN},* of the root mean square value of the speed feedback value *ω_{c}* per predetermined time width in a non-contact state.

Referring to FIG. 22, in a fine contact state, the grindstone GS and the workpiece W contact each other by a few to several micrometers. In this state, significant differences are not distinguishable when the maximum value and the minimal value of the position feedback value *θ_{c}* are respectively compared with the maximum value, *θ_{cMAX},* and the minimal value, *θ_{cMIN},* of the position feedback value *θ_{c}* in a non-contact state, in which there is no contact between the grindstone GS and the workpiece W. Thus, even if the position feedback value *θ_{c}* is used as it is, it is difficult to perform a detection based on a threshold. This is because, at contact time, there is a low possibility of the position feedback value *θ_{c}* going outside a range *R_{θc}* [*θ_{cMIN} - M_{θc}, θ_{cMAX} + M_{θc}*]. The range *R_{θc}* is obtained by adding, to the maximum value *θ_{cMAX}* and the minimal value *θ_{cMIN}* of the position feedback value *θ_{c}*, a margin *M_{θc}* for removing an influence such as a noise influence.

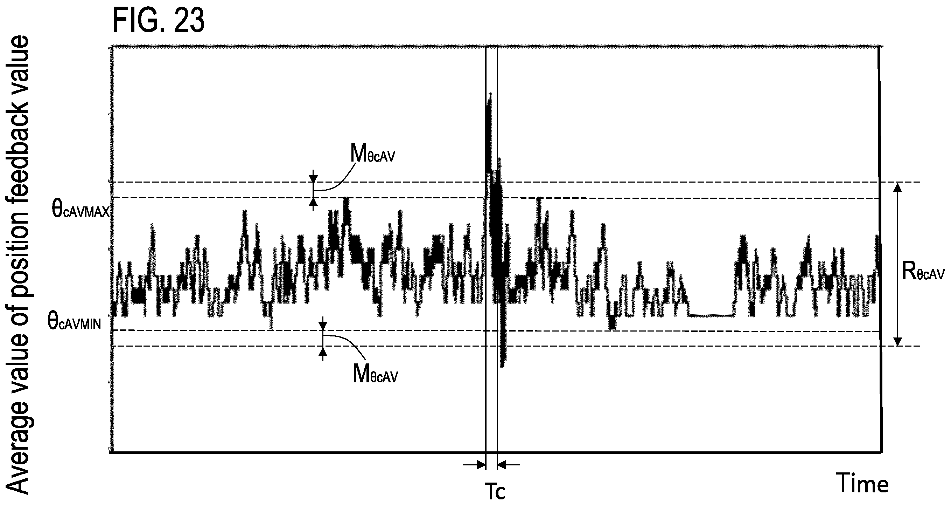

In a case where there is a difference between the time width of a value indicating the central tendency of the position feedback value *θ_{c}* and the variable frequency of the position feedback value *θ_{c}*, there may be a case where the value indicating the central tendency in the time width is calculated as a value partial to or around the maximum value *θ_{cMAX}* or the minimal value *θ_{cMIN}.* For example, a possible case is that the number of position feedback values *θ_{c}* in excess of the maximum value *θ_{cMAX}* in the time width is greatly larger than the number of position feedback values *θ_{c}* below the minimal value *θ_{cMIN}* in the time width. In this case, as illustrated in FIG. 23, due to the presence or absence of contact, a significant difference can be distinguished in a case of a value indicating the central tendency of the position feedback value *θ_{c}* per predetermined time width. A value indicating the central tendency of the position feedback value *θ_{c}* per predetermined time width is obtained from a plurality of positions feedback value *θ_{c}* in the time width including the time of interest. In this respect, as illustrated in FIG. 23, it can be determined that the grindstone GS and the workpiece W have come into contact with each other when the average value of the position feedback value *θ_{c}* per predetermined time width goes outside a range *R_{θcAV}* [*θ_{cAVMIN}* - *M_{θcAV}*, *θ_{cAVMAX}* + *M_{θcAV}*]*.* The range *R_{θcAV}* is obtained by adding a margin *M_{θcAV}* to the maximum value, *θ_{cAVMAX},* and the minimal value, *θ_{cAVMIN},* of the average value of the position feedback value *θ_{c}* per predetermined time width in a non-contact state. It is to be noted that, for example, in a case where the grindstone GS and the workpiece W contact for a particular time or in a case where a particular material is used, the presence or absence of contact may not necessarily cause a difference to occur in a value indicating the central tendency of the position feedback value *θ_{c}* per predetermined time width. In this case, it is difficult to detect contact using a value indicating the central tendency of the position feedback value *θ_{c}.*

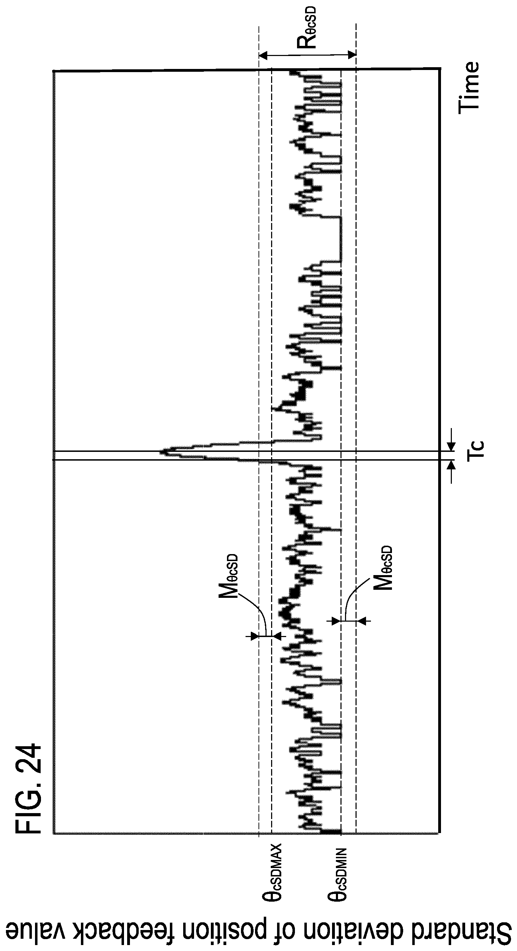

In contrast, as illustrated in FIG. 22, the position feedback value *θ_{c}* shows an increase in great amplitude changes at contact time. Accordingly, the statistical dispersion of the position feedback value *θ_{c}* increases. Thus, as illustrated in FIG. 24, a significant difference can be distinguished between the contact state and the non-contact state in the standard deviation of the position feedback value *θ_{c}.* Thus, as illustrated in FIG. 24, it can be determined that the grindstone GS and the workpiece W have come into contact with each other when the standard deviation of the position feedback value *θ_{c}* per predetermined time width goes outside a range *R_{θcSD}* [*θ_{cSDMIN} - M_{θcSD}, θ_{cSDMAX} + M_{θcSD}*]. The range *R_{θcSD}* is obtained by adding a margin *M_{θcSD}* to the maximum value, *θ_{cSDMAX},* and the minimal value, *θ_{cSDMIN},* of the standard deviation of the position feedback value *θ_{c}* per predetermined time width in a non-contact state.

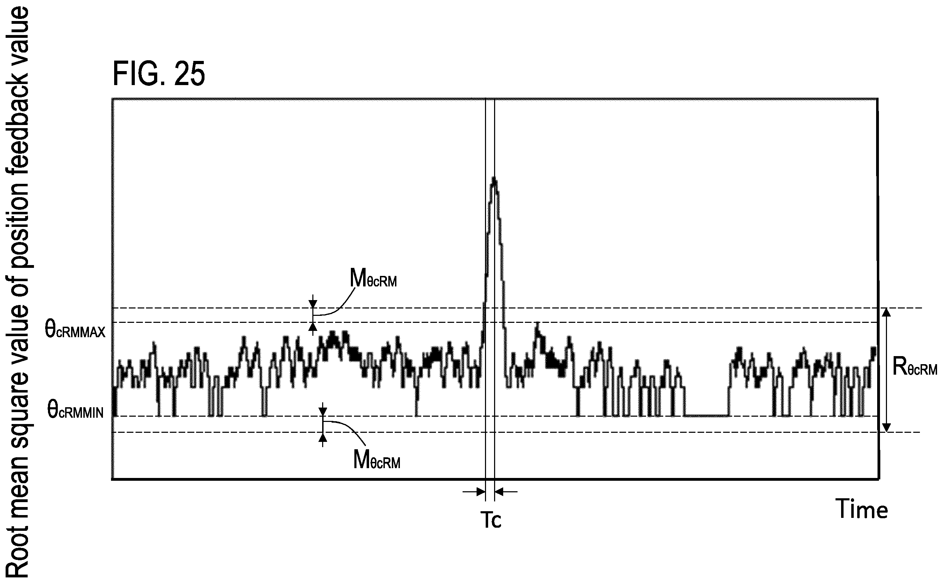

Also, the absolute value of a value indicating the central tendency of the position feedback value *θ_{c}* is close to zero. In this case, the value of the statistical dispersion of the position feedback value *θ_{c}* is much larger. Thus, in the root mean square value of the position feedback value *θ_{c}*, the statistical dispersion of the position feedback value *θ_{c}* contributes more greatly than a value indicating the central tendency of the position feedback value *θ_{c}.* Thus, as illustrated in FIG. 25, the root mean square value of the position feedback value *θ_{c}* per predetermined time width increases as compared with the corresponding value at non-contact time. The root mean square value of the position feedback value *θ_{c}* per predetermined time width is obtained from a plurality of the positions feedback values *θ_{c}* in the time width including the time of interest. Accordingly, it can be determined that the grindstone GS and the workpiece W have come into contact with each other when the root mean square value of the position feedback value *θ_{c}* per predetermined time width goes outside a range *R_{θcRM}* [*θ_{cRMMIN} - M_{θcRM}, θ_{cRMMAX} + M_{θcRM}*]*.* The range *R_{θcRM}* is obtained by adding a margin *M_{θcRM}* to the maximum value, *θ_{cRMMAX},* and the minimal value, *θ_{cRMMIN},* of the root mean square value of the position feedback value *θ_{c}* per predetermined time width in a non-contact state.

Thresholds or similar parameters defining the ranges *R_{irAV}, R_{irRM}, R_{icSD}, R_{ωc}, R_{ωcAV}, R_{ωcSD}, R_{ωcRM}, R_{θcAV}, R_{θcSD},* and *R_{θcRM}* obtained in the above-described manners are input to the monitoring device 8 via the I/O interface 6 and the numerical controller 5. Then, the monitoring device 8 detects the current command value *iᵣ,* the current feedback value *i_{c},* the speed feedback value *ω_{c},* and the position feedback value *θ_{c}*, and calculates an average value, a standard deviation, and a root mean square value in a per predetermined time width of each of these values. The average value, the standard deviation, and the root mean square value of the current command value *iᵣ* per predetermined time width are obtained from a plurality of the current command values *iᵣ* in the time width including the time of interest. The average value, the standard deviation, and the root mean square value of the current feedback value *i_{c}* per predetermined time width are obtained from a plurality of the current feedback values *i_{c}* in the time width including the time of interest. The average value, the standard deviation, and the root mean square value of the speed feedback value *ω_{c}* per predetermined time width are obtained from a plurality of the speed feedback values *ω_{c}* in the time width including the time of interest. The average value, the standard deviation, and the root mean square value of the position feedback value *θ_{c}* per predetermined time width are obtained from a plurality of the position feedback values *θ_{c}* in the time width including the time of interest.

### <Contact Detecting Method>

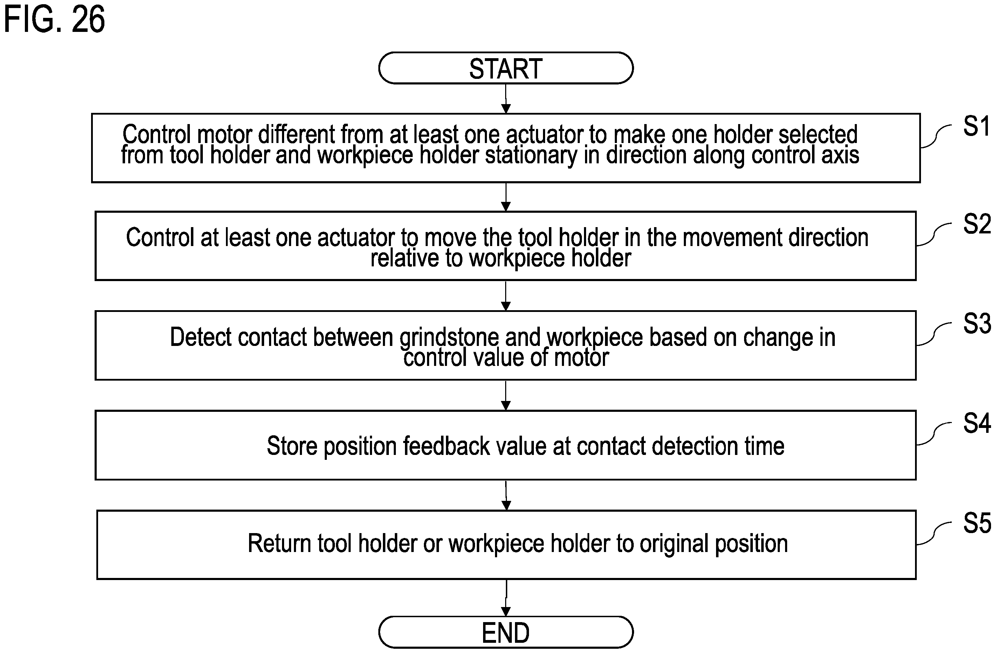

Next, a method according to this embodiment of detecting contact between the grindstone GS and the workpiece W will be described in detail by referring to FIG. 26. FIG. 26 is a flowchart of processing performed in the method according to this embodiment of detecting contact between the grindstone GS and the workpiece W. At step S1, the method controls a motor different from the at least one actuator to make one holder selected from the tool holder 16 and the workpiece holder 12 stationary in a direction along the control axis. In the examples illustrated in FIGs. 5 to 8, an example of the motor is the second motor 22. In the example illustrated in FIG. 9, an example of the motor is the third motor 23. This control may be position control to control one holder selected from the tool holder 16 and the workpiece holder 12 to be located at a particular position, or may be speed control to make the (rotational) speed of one holder selected from the tool holder 16 and the workpiece holder 12 zero.

At step S2, the method controls the at least one actuator to move the tool holder in the movement direction *MD* relative to the workpiece holder. In the example illustrated in FIG. 5, the first motor 21 or the fifth motor 25 corresponds to the at least one actuator. In the example illustrated in FIG. 6, the third motor 23 or the seventh motor 27 corresponds to the at least one actuator. In the example illustrated in FIG. 7, the first motor 21 and the third motor 23, or the fifth motor 25 and the seventh motor 27 correspond to the at least one actuator. In the example illustrated in FIG. 8, the third motor 23 or the seventh motor 27 corresponds to the at least one actuator. In the example illustrated in FIG. 9, the second motor 22 or the sixth motor 26 corresponds to the at least one actuator.

At step S3, the method detects contact between the grindstone GS and the workpiece W based on a change in the control value of the motor. The control value includes at least one of the current command value *iᵣ* of the current command to the motor, the current feedback value *i_{c}* from the motor, the position feedback value *θ_{c}*, and the speed feedback value *ω_{c}.* Specifically, the method determines that the grindstone GS and the workpiece W have come into contact with each other when a value indicating the central tendency of the current command value *iᵣ* per predetermined time width to the motor goes outside a predetermined range. Further specifically, the method determines that the grindstone GS and the workpiece W have come into contact with each other when at least one of the average value and the root mean square value of the current command value *iᵣ* per predetermined time width to the motor goes outside the predetermined ranges *R_{irAV}* and/or *RirRM.*

Alternatively, the method determines that the grindstone GS and the workpiece W have come into contact with each other when a value indicating the statistical dispersion of the current feedback value *i_{c}* per predetermined time width goes outside a predetermined range. Further specifically, the method determines that the grindstone GS and the workpiece W have come into contact with each other when the standard deviation of the current feedback value *i_{c}* per predetermined time width goes outside the predetermined range *R_{icSD}.*

Alternatively, in a case where position control is performed, the method determines that the grindstone GS and the workpiece W have come into contact with each other when the statistical dispersion of the position feedback value *θ_{c}* per predetermined time width goes outside a predetermined range. Further specifically, the method determines that the grindstone GS and the workpiece W have come into contact with each other when at least one of the standard deviation and the root mean square value of the position feedback value *θ_{c}* per predetermined time width goes outside the predetermined ranges *R_{θcSD}* and/or *R_{θcRM}.* The same applies in a full-closed loop system.

Alternatively, the method determines that the grindstone GS and the workpiece W have come into contact with each other when at least one of the speed feedback value *ω_{c}* and a value indicating the statistical dispersion of the speed feedback value *ω_{c}* per predetermined time width goes outside a predetermined range. Further specifically, the method determines that the grindstone GS and the workpiece W have come into contact with each other when at least one of the speed feedback value *ω_{c}* and the standard deviation and the root mean square value of the speed feedback value *ω_{c}* per predetermined time width goes outside the predetermined ranges *R_{ωc}, R_{ωcSD},* and *R_{ωcRM}.*

At step S4, the method stores the position feedback value *θ_{c}* (*P_{c}*) at the contact detection time in the memory 52. This value is used in grinding performed later. Lastly, at step S5, the method returns the tool holder 16 or the workpiece holder 12 to its original position. The original position is, for example, the origin position in the machining program. It is to be noted that step S4 or S5 may be omitted.

The contact detecting method described above may be implemented by executing only a program stored in the memory 52 of the numerical controller 5. In this case, the monitoring device 8 may transmit the current command value *iᵣ,* the current feedback value *i_{c},* the position feedback value *θ_{c}*, and the speed feedback value *ω_{c}* to the numerical controller 5. Then, the numerical controller 5 may calculate a value indicating the central tendency of each of these values per predetermined time width and a value indicating the statistical dispersion of these values per predetermined time width. Then, the numerical controller 5 may determine that the grindstone GS and the workpiece W have come into contact with each other.

Alternatively, by executing a program stored in the memory 52 of the numerical controller 5, only a determination may be made as to contact between the grindstone GS and the workpiece W. In this case, the monitoring device 8 calculates a value indicating the central tendency of each of the current command value *iᵣ,* the current feedback value *i_{c},* the position feedback value *θ_{c}*, and the speed feedback value *ω_{c}* per predetermined time width, or calculates a value indicating the statistical dispersion of each of these values per predetermined time width. Further, even a determination as contact between the grindstone GS and the workpiece W may be performed by a logic of the monitoring device 8, and only the processings at steps S4 and S5 may be performed by a program stored in the memory 52 of the numerical controller 5.

At least one or all of the functions of the program of the numerical controller 5 and the logic of the monitoring device 8 may be implemented by a dedicated processor and/or an integrated circuit. The program or the logic may not necessarily be stored in the memories 52 and 82, but may be recorded in a disc (disk) such as a floppy disk, an optical disc, a CD-ROM, and a magnetic disc; or a storage medium, such as an SD card, a USB memory, and external hard disc, that is removable from the numerical controller 5 and the monitoring device 8 and readable by the numerical controller 5 and the monitoring device 8. It is to be noted that the numerical controller 5 and the monitoring device 8 are examples of the computer.

### <Features and Effects of Contact Detecting Method according to This Embodiment>

The machine tool 1 according to this embodiment and the method according to this embodiment of detecting contact between the grindstone GS and the workpiece W detect contact between the grindstone GS and the workpiece W based on a change in a control value of a motor that performs control that does not need great power and easily secures stable power. This eliminates the need for much time for the setting for detection of contact between the grindstone GS and the workpiece W, and stabilizes signals at non-contact time. Further, the control axis crosses the tool rotation axis A_{XT} and crosses the movement direction *MD.* Further specifically, the control axis is orthogonal to the tool rotation axis A_{XT} and orthogonal to the movement direction *MD.* This increase the component in the control axis direction of the resistance occurring due to the contact between the grindstone GS and the workpiece W. Thus, contact between the grindstone GS and the workpiece W can be detected highly accurately based on a control value of the motor. The Applicant conducted an experiment according to the above-described method and, as a result, confirmed that contact between the grindstone GS and the workpiece W can be detected in a fine contact state in which the grindstone GS has ground the workpiece W to a degree of three micrometers. This contact detecting method ensures that highly accurate coordinate positioning for grinding purposes can be performed in a short period of time.

### <Modifications>

The results illustrated in FIGs. 11 to 25 vary depending on the control method employed in the position control device 70a, the speed control device 70b, the current control device 70c, and the voltage adjustment device 70d and on the gain used in these devices. Thus, the threshold for determining contact between the grindstone GS and the workpiece W may be variable depending on the control method of the servo driver 70 and/or the gain used. Further, the results illustrated in FIGs. 11 to 25 also vary depending on the resolution of each of the current command value *iᵣ,* the current feedback value *i_{c},* the position feedback value *θ_{c}*, and the speed feedback value *ω_{c},* or on the time width serving as a basis for calculating a value indicating a central tendency and a value indicating a statistical dispersion. This time width also depends on the sampling intervals at which the servo driver 70 performs sampling. In view of this, if the resolution and/or the sampling intervals decrease due to an improvement of the performance of the servo driver 70, the threshold for determining contact between the grindstone GS and the workpiece W may be changed.

In the above-described embodiment, it is determined that the grindstone GS and the workpiece W have come into contact with each other based on one value among a value indicating a central tendency of the current command value *iᵣ* of a current command to the motor, a value indicating the statistical dispersion of the current feedback value *i_{c}* from the motor, a value indicating the statistical dispersion of the position feedback value *θ_{c}*, and a value indicating the statistical dispersion of the speed feedback value *ω_{c}.* It may be determined that the grindstone GS and the workpiece W have come into contact with each other based on a combination of a plurality of these values. For example, if a predetermined number of values, among the plurality of values,, exceed the above determined range, it may be determined that the grindstone GS and the workpiece W have come into contact with each other. Alternatively, if a value obtained by weighting and adding the plurality of values exceeds a predetermined range, it may be determined that the grindstone GS and the workpiece W have come into contact with each other.

In the above-described embodiment, the at least one actuator may be an actuator other than a motor. For example, the at least one actuator may be a hydraulic pressure piston.

In the present application, the term "comprise" and its variations are intended to mean open-ended terms, not excluding any other elements and/or components that are not recited herein. The same applies to the terms "include", "have", and their variations.

Also in the present application, a component suffixed with a term such as "member", "portion", "part", "element", "body", and "structure" is intended to mean that there is a single such component or a plurality of such components.

Also in the present application, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

In the present disclosure, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

Also in the present application, the phrase "at least one of A and B" is intended to be interpreted as "only A", "only B", or "both A and B".

Obviously, numerous modifications and variations of the present invention are possible in light of the above teachings. It is therefore to be understood that within the scope of the appended claims, the present invention may be practiced otherwise than as specifically described herein.

## Claims

1. A contact detecting method for a machine tool (1) to detect contact between a grindstone (GS) and a workpiece (W), the method comprising:
controlling at least one actuator (20 - 27) to move a tool holder (16) in a movement direction (MD) relative to a workpiece holder (12) configured to hold the workpiece (W), the tool holder (16) being configured to hold the grindstone (GS) in a manner in which the grindstone (GS) is rotatable about a tool rotation axis (A_{XT});
**characterised by** controlling a motor (21 - 27) to make one holder (16, 12) selected from the tool holder (16) and the workpiece holder (12) stationary in a direction along a control axis crossing the tool rotation axis (A_{XT}) and crossing the movement direction (MD), the motor (21 - 27) being different from the at least one actuator (20 - 27) and configured to move the one holder (16, 12) along the control axis; and
detecting the contact between the grindstone (GS) and the workpiece (W) based on a change in a control value of the motor (21 - 27).

2. The contact detecting method according to claim 1, wherein the control axis is perpendicular to the tool rotation axis (A_{XT}).

3. The contact detecting method according to claim 1 or 2, wherein the control axis is perpendicular to a line extending in the movement direction (MD).

4. The contact detecting method according to any one of claims 1 to 3,
wherein the motor (21 - 27) is configured to move the tool holder (16) along the control axis, and
wherein the at least one actuator (20 - 27) comprises at least one additional motor (20, 23) configured to move the tool holder (16) along at least one additional control axis perpendicular to the control axis.

5. The contact detecting method according to any one of claims 1 to 4,
wherein the workpiece holder (12) is configured to hold the workpiece (W) in a manner in which the workpiece (W) is rotatable about a workpiece rotation axis (A_{XW}),
wherein when the tool rotation axis (A_{XT}) and the workpiece rotation axis (A_{XW}) exist on an identical plane, the movement direction (MD) is parallel to the identical plane, and
wherein when the tool rotation axis (A_{XT}) and the workpiece rotation axis (A_{XW}) are skew with respect to each other, the movement direction (MD) is along a line perpendicular to the tool rotation axis (A_{XT}) and the workpiece rotation axis (A_{XW}).

6. The contact detecting method according to any one of claims 1 to 5, wherein the control value comprises at least one of a current command value (*iᵣ*) to the motor (21 - 27), a current feedback value (*i_{c}*) from the motor (21 - 27), a position feedback value (*θ_{c}*) from the motor (21 - 27), and a speed feedback value (*ω_{c}*) from the motor (21 - 27).

7. The contact detecting method according to claim 6, wherein when a value indicating a central tendency of the current command value (*iᵣ*) per predetermined time width goes outside a predetermined range, it is determined that the grindstone (GS) and the workpiece (W) have come into contact with each other.

8. The contact detecting method according to claim 6, wherein when a value indicating a statistical dispersion of the current feedback value (*i_{c}*) per predetermined time width goes outside a predetermined range, it is determined that the grindstone (GS) and the workpiece (W) have come into contact with each other.

9. The contact detecting method according to claim 6, wherein when a statistical dispersion of the position feedback value (*θ_{c}*) per predetermined time width goes outside a predetermined range, it is determined that the grindstone (GS) and the workpiece (W) have come into contact with each other.

10. The contact detecting method according to claim 6, wherein when at least one value selected from the speed feedback value (*ω_{c}*) and a value indicating a statistical dispersion of the speed feedback value (*ω_{c}*) per predetermined time width goes outside a predetermined range, it is determined that the grindstone (GS) and the workpiece (W) have come into contact with each other.

11. The contact detecting method according to claim 7, wherein the value indicating the central tendency is represented by at least one value selected from an average value and a root mean square value.

12. The contact detecting method according to any one of claims 8 to 10, wherein the value indicating the statistical dispersion is represented by at least one value including a standard deviation.

13. The contact detecting method according to claim 9 or 10, wherein the value indicating the statistical dispersion is represented by at least one value including a root mean square value.

14. A machine tool (1) comprising means for performing the contact detecting method according to any one of claims 1 to 13.

15. A computer program comprising an instruction to, when the computer program is executed by a computer, cause the computer to perform the contact detecting method according to any one of claims 1 to 13.

## Patentansprüche

1. Kontakterfassungsverfahren für eine Werkzeugmaschine (1) zum Erfassen eines Kontakts zwischen einem Schleifstein (GS) und einem Werkstück (W), wobei das Verfahren Folgendes aufweist:
Steuern zumindest eines Stellglieds (20 - 27), um eine Werkzeughalterung (16) in einer Bewegungsrichtung (MD) relativ zu einer Werkstückhalterung (12) zu bewegen, die gestaltet ist, um das Werkstück (W) zu halten, wobei die Werkzeughalterung (16) gestaltet ist, um den Schleifstein (GS) in einer Weise zu halten, in der der Schleifstein (GS) um eine Werkzeugdrehachse (A_{XT}) drehbar ist;
**gekennzeichnet durch**
Steuern eines Motors (21 - 27), um eine Halterung (16, 12), die aus der Werkzeughalterung (16) und der Werkstückhalterung (12) ausgewählt wird, in einer Richtung entlang einer Steuerungsachse, die die Werkzeugdrehachse (A_{XT}) kreuzt und die Bewegungsrichtung (MD) kreuzt, stationär zu machen, wobei der Motor (21 - 27) von dem zumindest einen Stellglied (20 - 27) verschieden ist und gestaltet ist, um die eine Halterung (16, 12) entlang der Steuerungsachse zu bewegen; und
Erfassen des Kontakts zwischen dem Schleifstein (GS) und dem Werkstück (W) auf der Grundlage einer Änderung eines Steuerungswerts des Motors (21 - 27).

2. Kontakterfassungsverfahren nach Anspruch 1, wobei die Steuerungsachse senkrecht zu der Werkzeugdrehachse (A_{XT}) ist.

3. Kontakterfassungsverfahren nach Anspruch 1 oder 2, wobei die Steuerungsachse senkrecht zu einer in der Bewegungsrichtung (MD) verlaufenden Linie ist.

4. Kontakterfassungsverfahren nach einem der Ansprüche 1 bis 3,
wobei der Motor (21 - 27) gestaltet ist, um die Werkzeughalterung (16) entlang der Steuerungsachse zu bewegen, und
wobei das zumindest eine Stellglied (20 - 27) zumindest einen zusätzlichen Motor (20, 23) aufweist, der gestaltet ist, um die Werkzeughalterung (16) entlang zumindest einer zusätzlichen Steuerungsachse senkrecht zu der Steuerungsachse zu bewegen.

5. Kontakterfassungsverfahren nach einem der Ansprüche 1 bis 4,
wobei die Werkstückhalterung (12) gestaltet ist, um das Werkstück (W) in einer Weise zu halten, in der das Werkstück (W) um eine Werkstückdrehachse (A_{XW}) drehbar ist,
wobei, wenn die Werkzeugdrehachse (A_{XT}) und die Werkstückdrehachse (A_{XW}) in einer identischen Ebene liegen, die Bewegungsrichtung (MD) parallel zu der identischen Ebene ist, und
wobei, wenn die Werkzeugdrehachse (A_{XT}) und die Werkstückdrehachse (A_{XW}) schräg zueinander stehen, die Bewegungsrichtung (MD) entlang einer Linie senkrecht zu der Werkzeugdrehachse (A_{XT}) und der Werkstückdrehachse (A_{XW}) verläuft.

6. Kontakterfassungsverfahren nach einem der Ansprüche 1 bis 5, wobei der Steuerungswert zumindest einen von einem Stromanweisungswert (iᵣ) zu dem Motor (21 - 27), einem Stromfeedbackwert (i_{c}) von dem Motor (21 - 27), einem Positionsfeedbackwert (θ_{c}) von dem Motor (21 - 27) und einem Geschwindigkeitsfeedbackwert (ω_{c}) von dem Motor (21 - 27) aufweist.

7. Kontakterfassungsverfahren nach Anspruch 6, wobei, wenn ein Wert, der eine zentrale Tendenz des Stromanweisungswerts (iᵣ) pro vorbestimmter Zeitbreite anzeigt, außerhalb eines vorbestimmten Bereichs liegt, es bestimmt wird, dass der Schleifstein (GS) und das Werkstück (W) in Kontakt miteinander gekommen sind.

8. Kontakterfassungsverfahren nach Anspruch 6, wobei, wenn ein Wert, der eine statistische Streuung des Stromfeedbackwerts (i_{c}) pro vorbestimmter Zeitbreite anzeigt, außerhalb eines vorbestimmten Bereichs liegt, es bestimmt wird, dass der Schleifstein (GS) und das Werkstück (W) in Kontakt miteinander gekommen sind.

9. Kontakterfassungsverfahren nach Anspruch 6, wobei, wenn eine statistische Streuung des Positionsfeedbackwerts (θ_{c}) pro vorbestimmter Zeitbreite außerhalb eines vorbestimmten Bereichs liegt, es bestimmt wird, dass der Schleifstein (GS) und das Werkstück (W) in Kontakt miteinander gekommen sind.

10. Kontakterfassungsverfahren nach Anspruch 6, wobei, wenn zumindest ein Wert, der aus dem Geschwindigkeitsfeedbackwert (ω_{c}) und einem Wert, der eine statistische Streuung des Geschwindigkeitsfeedbackwerts (ω_{c}) pro vorbestimmter Zeitbreite anzeigt, außerhalb eines vorbestimmten Bereichs liegt, es bestimmt wird, dass der Schleifstein (GS) und das Werkstück (W) in Kontakt miteinander gekommen sind.

11. Kontakterfassungsverfahren nach Anspruch 7, wobei der Wert, der die zentrale Tendenz anzeigt, durch zumindest einen Wert, der aus einem Durchschnittswert und einem quadratischen Mittelwert ausgewählt wird, wiedergegeben wird.

12. Kontakterfassungsverfahren nach einem der Ansprüche 8 bis 10, wobei der Wert, der die statistische Streuung anzeigt, durch zumindest einen Wert, der eine Standardabweichung umfasst, wiedergegeben wird.

13. Kontakterfassungsverfahren nach Anspruch 9 oder 10, wobei der Wert, der die statistische Streuung anzeigt, durch zumindest einen Wert, der einen quadratischen Mittelwert umfasst, wiedergegeben wird.

14. Werkzeugmaschine (1), die eine Einrichtung zum Ausführen des Kontakterfassungsverfahrens nach einem der Ansprüche 1 bis 13 aufweist.

15. Computerprogramm, das eine Instruktion aufweist, die, wenn das Computerprogramm durch einen Computer ausgeführt wird, bewirkt, dass der Computer das Kontakterfassungsverfahren nach einem der Ansprüche 1 bis 13 ausführt.

## Revendications

1. Procédé de détection de contact pour une machine-outil (1) pour détecter un contact entre une meule à aiguiser (GS) et une pièce à travailler (W), le procédé comprenant les étapes consistant à :
commander au moins à un actionneur (20 - 27) de déplacer un porte-outil (16) dans une direction de déplacement (MD) par rapport à un porte-pièce (12) conçu pour tenir la pièce à travailler (W), le porte-outil (16) étant conçu pour tenir la meule à aiguiser (GS) de manière à ce que la meule à aiguiser (GS) puisse tourner autour d'un axe de rotation d'outil (A_{XT}) ;
**caractérisé par** l'étape consistant à commander à un moteur (21 - 27) d'amener un support (16, 12) sélectionné parmi le porte-outil (16) et le porte-pièce (12) à être fixe dans une direction le long d'un axe de commande croisant l'axe de rotation d'outil (A_{XT}) et croisant la direction de déplacement (MD), le moteur (21 - 27) étant différent de l'au moins un actionneur (20 - 27) et conçu pour déplacer le support (16, 12) le long de l'axe de commande ; et
détecter le contact entre la meule à aiguiser (GS) et la pièce à travailler (W) sur la base d'une modification d'une valeur de commande du moteur (21 - 27).

2. Procédé de détection de contact selon la revendication 1, l'axe de commande étant perpendiculaire à l'axe de rotation d'outil (A_{XT}).

3. Procédé de détection de contact selon la revendication 1 ou 2, l'axe de commande étant perpendiculaire à une ligne s'étendant dans la direction de déplacement (MD).

4. Procédé de détection de contact selon l'une quelconque des revendications 1 à 3,
le moteur (21 - 27) étant conçu pour déplacer le porte-outil (16) le long de l'axe de commande, et l'au moins un actionneur (20 - 27) comprenant au moins un moteur (20, 23) supplémentaire conçu pour déplacer le porte-outil (16) le long d'au moins un axe de commande supplémentaire perpendiculaire à l'axe de commande.

5. Procédé de détection de contact selon l'une quelconque des revendications 1 à 4,
le porte-pièce (12) étant conçu pour tenir la pièce à travailler (W) de sorte que la pièce à travailler (W) puisse tourner autour d'un axe de rotation de pièce (A_{XW}),
lorsque l'axe de rotation d'outil (A_{XT}) et l'axe de rotation de pièce à travailler (A_{XW}) existent sur un plan identique, la direction de déplacement (MD) étant parallèle au plan identique, et
lorsque l'axe de rotation d'outil (A_{XT}) et l'axe de rotation de pièce à travailler (A_{XW}) sont inclinés l'un par rapport à l'autre, la direction de déplacement (MD) étant le long d'une ligne perpendiculaire à l'axe de rotation d'outil (A_{XT}) et à l'axe de rotation de pièce à travailler (A_{XW}).

6. Procédé de détection de contact selon l'une quelconque des revendications 1 à 5, la valeur de commande comprenant au moins l'une d'une valeur de commande de courant (*iᵣ*) vers le moteur (21 - 27), d'une valeur de retour de courant (*i_{c}*) provenant du moteur (21 - 27), d'une valeur de retour de position (*θ_{c}*) provenant du moteur (21 - 27), et d'une valeur de retour de vitesse (*ω_{c}*) provenant du moteur (21 - 27).

7. Procédé de détection de contact selon la revendication 6, lorsqu'une valeur indiquant une tendance centrale de la valeur de commande de courant (*iᵣ*) par intervalle de temps prédéfini sort d'une plage prédéfinie, ledit procédé permettant de déterminer que la meule à aiguiser (GS) et la pièce à travailler (W) sont entrées en contact l'une avec l'autre.

8. Procédé de détection de contact selon la revendication 6, lorsqu'une valeur indiquant une dispersion statistique de la valeur de retour de courant (*i_{c}*) par durée prédéfinie sort d'une plage prédéfinie, ledit procédé permettant de déterminer que la meule à aiguiser (GS) et la pièce à travailler (W) sont entrées en contact l'une avec l'autre.

9. Procédé de détection de contact selon la revendication 6, lorsqu'une dispersion statistique de la valeur de retour de position (*θ_{c}*) par durée prédéfinie sort d'une plage prédéfinie, ledit procédé permettant de déterminer que la meule à aiguiser (GS) et la pièce à travailler (W) sont entrées en contact l'une avec l'autre.

10. Procédé de détection de contact selon la revendication 6, lorsqu'au moins une valeur sélectionnée parmi la valeur de retour de vitesse (*ω_{c}*) et une valeur indiquant une dispersion statistique de la valeur de retour de vitesse (*ω_{c}*) par durée prédéfinie sort d'une plage prédéfinie, ledit procédé permettant de déterminer que la meule à aiguiser (GS) et la pièce à travailler (W) sont entrées en contact l'une avec l'autre.

11. Procédé de détection de contact selon la revendication 7, la valeur indiquant la tendance centrale étant représentée par au moins une valeur sélectionnée parmi une valeur moyenne et une valeur quadratique moyenne.

12. Procédé de détection de contact selon l'une quelconque des revendications 8 à 10, la valeur indiquant la dispersion statistique étant représentée par au moins une valeur incluant un écart-type.

13. Procédé de détection de contact selon la revendication 9 ou 10, la valeur indiquant la dispersion statistique étant représentée par au moins une valeur incluant une valeur quadratique moyenne.

14. Machine-outil (1) comprenant un moyen pour exécuter le procédé de détection de contact selon l'une quelconque des revendications 1 à 13.

15. Programme informatique comprenant une instruction pour, lorsque le programme informatique est exécuté par un ordinateur, amener l'ordinateur à exécuter le procédé de détection de contact selon l'une quelconque des revendications 1 à 13.
